(19)

**Europäisches Patentamt**

**European Patent Office**

**Office européen des brevets**

(11)  **EP 2 978 090 A1**

(12)  # EUROPÄISCHE PATENTANMELDUNG

(43) Veröffentlichungstag:
**27.01.2016  Patentblatt 2016/04**

(51) Int Cl.:
**H02H 3/20** (2006.01)    H02H 3/087 (2006.01)

(21) Anmeldenummer: **15178059.0**

(22) Anmeldetag: **23.07.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **24.07.2014  DE 102014110481**

(71) Anmelder:
• **Helmut-Schmidt-Universität**
  **22043 Hamburg (DE)**
• **Hamburg Innovation GmbH**
  **21079 Hamburg (DE)**

(72) Erfinder:
• **LÜCKEN, Arno**
  **20259 Hamburg (DE)**
• **SCHULZ, Detlef**
  **22043 Hamburg (DE)**
• **STORJOHANN, Jens**
  **22765 Hamburg (DE)**
• **GRUMM, Florian**
  **12587 Berlin (DE)**

(74) Vertreter: **RGTH**
**Patentanwälte PartGmbB**
**Neuer Wall 10**
**20354 Hamburg (DE)**

(54) **SCHUTZEINRICHTUNG FÜR ELEKTRISCHE ENERGIEVERSORGUNGSNETZE, ENERGIEQUELLE, ENERGIEVERSORGUNGSNETZ SOWIE VERWENDUNG EINER DERARTIGEN SCHUTZEINRICHTUNG**

(57)  Eine Schutzeinrichtung (100;200) für elektrische Energieversorgungsnetze (127), in denen wenigstens eine Last aus wenigstens einer Energiequelle (126,134) speisbar ist, umfasst wenigstens eine Unterspannungs-Überwachungseinrichtung (106) zum Detektieren, ob eine aus einer von der wenigstens einen Energiequelle abgebbaren Versorgungsspannung ableitbare Messgleichspannung ($U_Q$) einen ersten Schwellenwert ($U_{S1}$) unterschreitet, wenigstens eine Überspannungs-Überwachungseinrichtung (107) zum Detektieren, ob die Messgleichspannung einen zweiten Schwellenwert ($U_{S2}$) überschreitet, und wenigstens eine Schalteinrichtung (114) zum Herstellen einer elektrischen Verbindung zwischen der wenigstens einen Energiequelle und der wenigstens einen Last, wenn die Messgleichspannung mindestens dem ersten und höchstens dem zweiten Schwellenwert entspricht. Die wenigstens eine Unterspannungs-Überwachungseinrichtung, die wenigstens eine Überspannungs-Überwachungseinrichtung und die wenigstens eine Schalteinrichtung sind ausschließlich aus der von der wenigstens einen Energiequelle abgebbaren Versorgungsspannung und/oder der Messgleichspannung speisbar. Die Schutzeinrichtung ist als primärer Netzschutz bei Über- und Unterspannungen präzise, eigensicher, einfach, robust und universell einsetzbar. Beschrieben werden eine Energiequelle, ein Energieversorgungsnetz mit und eine Verwendung der Schutzeinrichtung.

EP 2 978 090 A1

**Fig. 1**

**Beschreibung**

Die Erfindung betrifft eine Schutzeinrichtung für elektrische Energieversorgungsnetze. Die Erfindung betrifft weiterhin eine Energiequelle und ein Energieversorgungsnetz mit einer derartigen Schutzeinrichtung. Die Erfindung betrifft außerdem eine Verwendung einer derartigen Schutzeinrichtung.

**Stand der Technik**

Aus der Druckschrift US-PS 3,718,839 ist eine Unterspannungsschutzeinrichtung bekannt, die eine konventionelle Wechselspannungsquelle umfasst, an die eine Last angeschlossen ist. Eine Anode eines Gleichrichters ist mit der Wechselspannungsquelle verbunden, und eine Kathode des Gleichrichters ist mit einem ersten Anschluss eines Widerstands verbunden, der über einen Verbindungspunkt mit einem Kondensator in Reihe geschaltet ist. Der Kondensator ist andererseits an einen Nullleiter geführt, durch den ein Pol der Wechselspannungsquelle mit einem Pol der Last unmittelbar verbunden ist. Die Reihenschaltung des Widerstands und des Kondensators bildet eine Filteranordnung. Der Gleichrichter liefert an seinem Ausgang eine gleichgerichtete, ungefilterte Spannung, deren augenblickliche Größe ein Maß der niedrigsten augenblicklichen Größe der Spannung der Wechselspannungsquelle ist. Außerdem ist die Kathode des Gleichrichters mit einem ersten Anschluss einer Relaisspule eines Relais verbunden. Ein zweiter Anschluss der Relaisspule ist mit einer Anode eines gesteuerten Gleichrichters gekoppelt, dessen Kathode mit dem Nullleiter gekoppelt ist. Ein vom Relais umfasster Schaltkontakt ist in einer Verbindung eines zweiten Pols der Wechselspannungsquelle mit einem zweiten Pol der Last angeordnet.

Ein Messpotentiometer, d.h. Spannungsteiler, ist zwischen dem Verbindungspunkt und dem Nullleiter angeschlossen. Das Messpotentiometer enthält eine variable Anzapfung, über die ein einstellbarer Teil der am Verbindungspunkt anliegenden, vom Gleichrichter gelieferten, gleichgerichteten, gefilterten Spannung geliefert wird. Die Anzapfung des Messpotentiometers ist mit einer Steuerelektrode des gesteuerten Gleichrichters verbunden. Der gesteuerte Gleichrichter führt einen Strom zwischen seiner Anode und seiner Kathode, wenn eine über die Anzapfung vom Messpotentiometer abgegriffene Spannung eine bestimmte Spannungsschwelle übersteigt und damit ein Steuerstrom von der Anzapfung des Messpotentiometers über die Steuerelektrode zur Kathode fließt. Der Strom zwischen Anode und Kathode im gesteuerten Gleichrichter fließt durch die Relaisspule. Dadurch wird der Schaltkontakt geschlossen und eine leitende Verbindung zwischen dem zweiten Pol der Wechselspannungsquelle und dem zweiten Pol der Last hergestellt. Somit wird umgekehrt die Last von der Wechselspannungsquelle getrennt, wenn deren Spannung einen bestimmten, über die Anzapfung des Messpotentiometers einstellbaren Wert unterschreitet.

Aus der Druckschrift US-PS 3,656,045 ist eine Batterieschutzschaltung bekannt. Die Schaltung enthält ein Paar Eingangsanschlüsse, die für eine Verbindung mit einer Batterie eingerichtet sind, und ein Paar Ausgangsanschlüsse, die für eine Verbindung mit einer Last eingerichtet sind. Ein Schaltmittel ist vorgesehen, das betätigbar ist zwischen einem ersten Schaltzustand, in dem das Paar Eingangsanschlüsse mit dem Paar Ausgangsanschlüssen in einer Reihenschaltung verbunden ist, und einem zweiten Schaltzustand, in dem das Schaltmittel wenigstens einen Eingangsanschluss von einem Ausgangsanschluss trennt. Eine Trennungseinrichtung ist in Reaktion auf einen Abfall einer Batteriespannung unter einen vorbestimmten Wert betreibbar, um das Schaltmittel in den zweiten Schaltzustand zu überführen. Ein Abschaltmittel ist vorgesehen, das in Reaktion auf ein Abfallen einer Batterietemperatur unter eine vorbestimmte Temperatur betreibbar ist, die Trennungseinrichtung abzuschalten.

Diese Batterieschutzschaltung bildet einen Entladeschutz für Batterien, durch den eine vollständige Entladung der Batterie verhindert wird und durch den außerdem die Temperatur der Batterie überwacht wird. Bei kaltem Wetter wird durch eine Niedrigtemperaturabschaltung des Entladeschutzes ein Stromfluss von der Batterie in die Last zum Aufwärmen der Batterie auch bei geringer Batteriespannung erlaubt.

Aus der Druckschrift US-PS 5,555,483 ist ein automatisches Kraftstrom- bzw. Sammelleitungs-Überwachungssystem bekannt zum Überwachen der einem elektrischen System oder Gerät zugeführten elektrischen Spannung, zum Unterbrechen der Spannungszufuhr zu dem elektrischen System oder Gerät, wenn die bereitgestellte elektrische Spannung sich nicht innerhalb eines vorgegebenen Spannungsbereichs befindet, und zum automatischen Wiederherstellen der dem elektrischen System oder Gerät zugeführten elektrischen Spannung, wenn die bereitgestellte elektrische Spannung sich innerhalb des vorgegebenen Spannungsbereichs befindet. Dabei handelt es sich um eine automatisch wiedereinschaltende Über- und Unterspannungsabschaltung zum Schutz des einen Verbraucher bildenden elektrischen Systems oder Geräts gegen Spannungsschwankungen auf der Kraftstromleitung. Als Aufgabe des beschriebenen Kraftstrom- bzw. Sammelleitungs-Überwachungssystems ist aufgeführt, die einem Freizeitfahrzeug durch eine Campingplatz-Stromversorgung zugeführte elektrische Spannung zu überwachen und automatisch zu verhindern, dass elektrische Spannungen unterhalb oder oberhalb des vorgegebenen Spannungsbereichs das elektrische System des Freizeitfahrzeugs erreichen, sowie automatisch die Energieversorgung wiederaufzunehmen, wenn die zugeführte elektrische Spannung in den gewünschten, vorgegebenen Spannungsbereich zurückkehrt.

Die bekannten Schutzeinrichtungen sind jedoch als sogenannter primärer Netzschutz nicht geeignet. Insbesondere sind die bekannten Schutzeinrichtungen nicht geeignet für einen primären Netzschutz, der sowohl bei Über- als auch bei Unterspannungen präzise und eigensicher arbeitet.

Weiterhin ist aus der Druckschrift US-PS 3,809,963 ein Kraftstrom- bzw. Sammelleitungs-System bekannt, das eine Steuerung enthält, die eine mit einer Sensor- bzw. Messbrücke und nachgeordneten Transistorschaltern gebildete Sensorschaltung nutzt, um die Ausgangslastwerte - hier: Ausgangsspannungswerte von Stromversorgungen - zu überwachen und das System automatisch abzuschalten, wenn diese Werte sich außerhalb eines vorgegebenen Bereichs befinden. Die Steuerung umfasst einen manuell betätigbaren Schalter, der das Kraftstrom- bzw. Sammelleitungs-System anfänglich unmittelbar sowohl ein- als auch ausschaltet, und enthält ein Verzögerungsnetzwerk, das wiederholtes Ein- und Ausschalten des Kraftstrom- bzw. Sammelleitungs-Systems innerhalb eines vorbestimmten Zeitintervalls verhindert. Versuche, das System innerhalb des vorbestimmten Zeitintervalls wiedereinzuschalten, haben ein Rücksetzen des Verzögerungsnetzwerks zur Folge, was den Benutzer verursacht, das gesamte Zeitintervall abzuwarten, bevor das System wiedereingeschaltet werden kann.

Es zeigt sich jedoch, dass auch diese Schutzeinrichtung nicht hinreichend präzise und eigensicher arbeitet, um in der gewünschten Weise als primärer Netzschutz, insbesondere in Energieversorgungsnetzen mit Energiequellen mit einer geringen Überstromfähigkeit, dienen zu können.

### Darstellung der Erfindung: Aufgabe, Lösung, Vorteile

Die Erfindung hat die Aufgabe, eine Schutzeinrichtung zu schaffen, die als primärer Netzschutz geeignet ist, sowohl bei Über- als auch bei Unterspannungen präzise und eigensicher arbeitet und dabei einfach und robust aufgebaut und universell einsetzbar ist.

Diese Aufgabe wird gelöst durch eine Schutzeinrichtung für elektrische Energieversorgungsnetze, in denen wenigstens eine Last aus wenigstens einer Energiequelle speisbar, d.h. mit der wenigstens einen Energiequelle zum Speisen mit Energie aus dieser Energiequelle verbindbar, ist, wobei die Schutzeinrichtung umfasst: wenigstens eine Unterspannungs-Überwachungseinrichtung zum Detektieren, ob eine aus einer von der wenigstens einen Energiequelle abgebbaren Versorgungsspannung ableitbare Messgleichspannung einen ersten Schwellenwert unterschreitet, wenigstens eine Überspannungs-Überwachungseinrichtung zum Detektieren, ob die Messgleichspannung einen zweiten Schwellenwert überschreitet, und wenigstens eine von der wenigstens einen Unterspannungs-Überwachungseinrichtung und der wenigstens einen Überspannungs-Überwachungseinrichtung gesteuerte Schalteinrichtung zum Herstellen einer elektrischen Verbindung zwischen der wenigstens einen Energiequelle und der wenigstens einen Last, wenn die Messgleichspannung mindestens dem ersten und höchstens dem zweiten Schwellenwert entspricht, wobei die wenigstens eine Unterspannungs-Überwachungseinrichtung, die wenigstens eine Überspannungs-Überwachungseinrichtung und die wenigstens eine Schalteinrichtung ausschließlich aus der von der wenigstens einen Energiequelle abgebbaren Versorgungsspannung und/oder der Messgleichspannung speisbar, d.h. zum ausschließlichen Speisen aus der wenigstens einen Energiequelle mit dieser verbindbar, sind. Dabei bildet der Wert der Messgleichspannung ein direktes Maß für die Höhe der Versorgungsspannung, insbesondere deren Betrag oder auch Amplitude bzw. Effektivwert. Die Messgleichspannung weist dabei stets eine einzige, fest vorgegebene Polarität auf. Durch die wenigstens eine Schalteinrichtung kann wahlweise gemäß unterschiedlichen Ausgestaltungen der erfindungsgemäßen Schutzeinrichtung die elektrische Verbindung zwischen der wenigstens einen Energiequelle und der wenigstens einen Last ein- oder mehrpolig hergestellt oder unterbrochen werden, es können mehrere Lasten jeweils getrennt geschaltet werden oder es kann je eine Last mit zwei oder mehreren in Reihen- oder Kettenschaltung verbundenen, simultan gesteuerten Schalteinrichtungen geschaltet werden; die letztgenannte Konfiguration dient der Erhöhung der Funktionssicherheit.

Um ein elektrisches Energieversorgungsnetz zu betreiben, ist eine Schutzeinrichtung notwendig, die bei Auftreten eines Fehlers das Energieversorgungsnetz sicher und zuverlässig schützt. Dazu ist ein sogenannter primärer Netzschutz erforderlich, der direkt, d.h. ohne zusätzliche, externe sekundäre Energiequellen nur mit derjenigen Energiequelle bzw. denjenigen Energiequellen arbeitet, aus denen die wenigstens eine Last über das Energieversorgungsnetz gespeist wird und die auch als primäre Energiequellen bezeichnet werden können, und der ferner durch eine Erregungsgröße in einem Hauptstromkreis zwischen der wenigstens einen (primären) Energiequelle und der wenigstens einen Last angeregt wird. Daneben können weitere Schutzeinrichtungen, insbesondere sogenannte sekundäre Schutzeinrichtungen, vorhanden sein. Der primäre Netzschutz ist jedoch derart auszubilden, dass er in jedem möglichen Fehlerfall auch dann noch zuverlässig reagiert, wenn alle anderen, insbesondere sekundären, Schutzeinrichtungen ausfallen.

Gemäß der erfindungsgemäßen Schutzeinrichtung sind weiterhin die wenigstens eine Unterspannungs-Überwachungseinrichtung und die wenigstens eine Überspannungs-Überwachungseinrichtung mit Schwellenwertschaltungen ausgebildet, die zum Vergleichen der Messgleichspannung mit dem ersten bzw. zweiten Schwellenwert und zum Liefern jeweils eines Abschaltsteuersignals an die wenigstens eine Schalteinrichtung ausgestaltet sind, wenn die Messgleichspannung den ersten Schwellenwert unterschreitet bzw. den zweiten Schwellenwert überschreitet. Durch die Abschaltsteuersignale wird die wenigstens eine Schalteinrichtung abgeschaltet, d.h. wird durch die wenigstens eine Schalteinrichtung die elektrische Verbindung zwischen der wenigstens einen Energiequelle und der wenigstens einen Last unterbrochen. Die Schwellenwertschaltungen sind vorteilhaft an die Parameter des jeweiligen Energieversorgungsnetzes angepasst dimensionierbar, insbesondere durch Wahl passender Schwellenwerte. Dies ermöglicht einen flexiblen Einsatz der erfindungsgemäßen Schutzeinrichtung.

Bei der erfindungsgemäßen Schutzeinrichtung ist außerdem die wenigstens eine Schalteinrichtung mit einer Komparatoranordnung, bevorzugt einer Differenzverstärkeranordnung, ausgebildet, wobei die Komparatoranordnung in einen zweiten Schaltzustand steuerbar ist, wenn ihr eines der Abschaltsteuersignale zugeführt wird, und ansonsten einen ersten Schaltzustand einnimmt, d.h. die Komparatoranordnung ist dazu ausgestaltet, die beschriebenen Schaltzustände je nach Auftreten oder Nichtvorliegen der Abschaltsteuersignale einzunehmen. Dabei wird der erste Schaltzustand angenommen, wenn sich der Wert der Messgleichspannung in einem zulässigen Spannungsbereich befindet, und wird der zweite Schaltzustand angenommen, sobald der Wert der Messgleichspannung diesen zulässigen Spannungsbereich verlässt, und wird dadurch die wenigstens eine Last von der wenigstens einen Energiequelle getrennt. Bevorzugt bleibt dabei die Schutzeinrichtung selbst mit der wenigstens einen Energiequelle verbunden, so dass auch nach Eintreten eines Fehlerfalls eine fortgesetzte Unter- und Überspannungsüberwachung erfolgt.

Die Erfindung ermöglicht einen primären Netzschutz der beschriebenen Art mit einfachen Mitteln, wobei ein Schutz sowohl gegen Unterspannungen als auch gegen Überspannungen zuverlässig gegeben ist.

Vorteilhafte Ausgestaltungen der Erfindung sind in den Unteransprüchen gekennzeichnet.

In einer vorteilhaften Weiterbildung der erfindungsgemäßen Schutzeinrichtung umfasst die wenigstens eine Schalteinrichtung weiterhin wenigstens eine von der Komparatoranordnung steuerbare Lastschalteinrichtung, durch die die elektrische Verbindung zwischen der wenigstens einen Energiequelle und der wenigstens einen Last im ersten Schaltzustand der Komparatoranordnung herstellbar und in deren zweitem Schaltzustand unterbrechbar ist. Weiter bevorzugt umfasst die wenigstens eine Lastschalteinrichtung wenigstens eine steuerbare Stromquellenanordnung und wenigstens einen von der Stromquellenanordnung durch Zuführen eines Steuerstroms steuerbaren, insbesondere elektromagnetischen, Lastschalter und ist die Stromquellenanordnung von der Komparatoranordnung derart steuerbar, dass der Steuerstrom dem Lastschalter im ersten Schaltzustand der Komparatoranordnung zuführbar ist und in deren zweitem Schaltzustand unterbrochen ist. Besonders bevorzugt ist der Lastschalter mit wenigstens einem Relais aufgebaut. Durch diese Weiterbildungen wird ein einfacher, robuster und betriebssicherer Aufbau erhalten.

Bei einer anderen Ausführungsform der Erfindung weist die Schutzeinrichtung eine Einschaltstufe auf, der ein Einschaltsignal zuführbar ist, wodurch die wenigstens eine Schalteinrichtung, bevorzugt die wenigstens eine Lastschalteinrichtung, besonders bevorzugt die wenigstens eine steuerbare Stromquellenanordnung mit dem durch sie steuerbaren wenigstens einen, insbesondere elektromagnetischen, Lastschalter, aus einem zweiten Steuerzustand, in dem die elektrische Verbindung zwischen der wenigstens einen Energiequelle und der wenigstens einen Last unterbrochen ist, in einen ersten Steuerzustand, in dem die elektrische Verbindung zwischen der wenigstens einen Energiequelle und der wenigstens einen Last hergestellt ist, überführbar ist. Insbesondere wird durch die Einschaltstufe die Stromquellenanordnung derart betätigt, dass durch Zuführen eines Steuerstroms zum Lastschalter dieser den ersten Steuerzustand annimmt, in dem die Verbindung der wenigstens einen Energiequelle mit der wenigstens einen Last hergestellt ist. Bevorzugt dient diese Ausführungsform dem Herstellen eines definierten Steuerzustands bei einer Inbetriebnahme der erfindungsgemäßen Schutzeinrichtung, auch bei ihrer Wiederinbetriebnahme z.B. nach Auftreten eines Fehlerfalls, wie nachfolgend noch erläutert wird.

Nach einer bevorzugten Weiterbildung der erfindungsgemäßen Schutzeinrichtung ist das Einschaltsignal der Einschaltstufe durch eine externe Wirkverbindung zuführbar. Die externe Wirkverbindung kann mit einer Steuerleitung von einer externen Steuereinrichtung zum externen, ggf. zentralen Steuern des Netzschutzes oder auch mit einem mit der erfindungsgemäßen Schutzeinrichtung verbundenen, durch einen Nutzer manuell betätigbaren Taster ausgebildet sein.

In einer weiteren bevorzugten Ausführungsform der erfindungsgemäßen Schutzeinrichtung ist die wenigstens eine Schalteinrichtung, bevorzugt die wenigstens eine Lastschalteinrichtung, besonders bevorzugt die wenigstens eine steuerbare Stromquellenanordnung mit dem durch sie steuerbaren wenigstens einen, insbesondere elektromagnetischen, Lastschalter, aus dem zweiten Steuerzustand nur durch das Einschaltsignal in den ersten Steuerzustand überführbar. Das Anlegen des Einschaltsignals ist somit notwendige Bedingung für das Herstellen einer elektrischen Verbindung zwischen der wenigstens einen Energiequelle und der wenigstens einen Last durch die Schutzeinrichtung. Damit ist sichergestellt, dass ohne explizites Vorliegen dieses Einschaltsignals keine elektrische Verbindung zwischen der wenigstens einen Energiequelle und der wenigstens einen Last herstellbar ist. Dies dient als Anlaufsperre für eine Inbetriebnahme und nach Auftreten eines Fehlerfalls und Abschalten der Schutzeinrichtung auch als Wiederanlaufsperre für eine Wiederinbetriebnahme der zusätzlichen Betriebssicherheit der erfindungsgemäßen Schutzeinrichtung und eines damit betriebenen Energieversorgungsnetzes.

Nach einer anderen Ausführungsform der erfindungsgemäßen Schutzeinrichtung weist die wenigstens eine Schalteinrichtung, bevorzugt die Komparatoranordnung, besonders bevorzugt die Differenzverstärkeranordnung, wenigstens eine Einrichtung auf zum Zuführen wenigstens eines weiteren Steuersignals zum Steuern des Steuerzustands der wenigstens einen Schalteinrichtung, bevorzugt des Schaltzustands der Komparatoranordnung, besonders bevorzugt der Differenzverstärkeranordnung, und ist das weitere Steuersignal insbesondere ein weiteres Abschaltsteuersignal, durch das die Komparatoranordnung in den zweiten Schaltzustand steuerbar ist. Damit ist außer dem Einschalten über das Einschaltsignal auch wenigstens eine weitere Funktion der erfindungsgemäßen Schutzeinrichtung extern steuerbar bzw. ist die Schutzeinrichtung auch durch weitere Einflussgrößen steuerbar. Insbesondere kann so die Schutzeinrichtung zusätzlich durch die weiteren Einflussgrößen abschaltbar ausgebildet sein, so dass von der Schutzeinrichtung weitere Überwachungsfunktionen ausübbar sind. Die Einrichtung zum Zuführen des wenigstens einen weiteren Steuersignals kann manuell durch einen Nutzer betätigbar sein oder durch wenigstens eine andere, externe Steuereinrichtung. Bevorzugt kann das wenigstens eine weitere Steuersignal von wenigstens einer Sensoreinrichtung zum Erfassen wenigstens eines Betriebsparameters der wenigstens einen Energiequelle, der wenigstens einen Last, des Energieversorgungsnetzes und/oder der Schutzeinrichtung erzeugbar sein. Besonders bevorzugt ist die wenigstens eine Sensoreinrichtung mit wenigstens einem Temperatursensor ausgebildet zum Erfassen wenigstens einer Betriebstemperatur als des wenigstens einen Betriebsparameters.

Gemäß einer noch anderen Ausführungsform der erfindungsgemäßen Schutzeinrichtung ist die wenigstens eine steuerbare Stromquellenanordnung von der Einschaltstufe steuerbar ausgebildet zu einem durch das Zuführen des Einschaltsignals veranlassten Liefern eines erhöhten Steuerstroms an den Lastschalter. Vorteilhaft ist dazu die wenigstens eine steuerbare Stromquellenanordnung mit wenigstens einer Haltestromquelle zum Liefern eines Haltestroms als Steuerstrom an den Lastschalter zum Aufrechterhalten des ersten Steuerzustands und mit wenigstens einer Einschaltstromquelle zum Liefern eines zusätzlichen Einschaltstroms für das Einschalten, d.h. das Überführen des Lastschalters in den ersten Steuerzustand, ausgebildet. Zum Einschalten wird dann die Einschaltstromquelle über ein vorgebbares Zeitintervall hinweg, bevorzugt mindestens für die Dauer des Anliegens des Einschaltsignals, besonders bevorzugt bestimmt durch ein Zeitglied, zugeschaltet. Diese Ausführungsform ist besonders vorteilhaft einsetzbar für Lastschalter, die zum Einschalten einen gegenüber dem Haltestrom erhöhten Steuerstrom benötigen, wie insbesondere elektromagnetische Lastschalter, bevorzugt Relais. Durch diese Ausführungsform kann der Steuerstrom im ersten Steuerzustand begrenzt, ein Eigenenergieverbrauch innerhalb der Schutzeinrichtung minimiert und dadurch die Dimensionierung der Schutzeinrichtung kostengünstig gestaltet und die Betriebssicherheit erhöht werden.

Nach einer bevorzugten Weiterbildung der erfindungsgemäßen Schutzeinrichtung sind die wenigstens eine Unterspannungs-Überwachungseinrichtung und/oder die wenigstens eine Überspannungs-Überwachungseinrichtung mit Zeitgliedern ausgebildet zum Unterdrücken eines Einflusses vorgebbare Zeitdauern unterschreitender Unterschreitungen des ersten Schwellenwerts und/oder Überschreitungen des zweiten Schwellenwerts auf das Steuern der wenigstens einen Schalteinrichtung. Damit wird ein unerwünschtes Ansprechen der Schutzeinrichtungen auf kurzzeitige Unter- und/oder Überspannungsspitzen, insbesondere hochfrequente und/oder transiente Störungen der Versorgungsspannung, z.B. Störimpulse, unterdrückt und damit die Betriebssicherheit erhöht.

Bei einer weiteren bevorzugten Ausführungsform der erfindungsgemäßen Schutzeinrichtung stimmt die Messgleichspannung mit der Versorgungsspannung wenigstens nahezu überein. Dies ist vorteilhaft der Fall in Energieversorgungsnetzen, die mit einer Versorgungsgleichspannung betrieben werden, insbesondere bei Bordnetzen mobiler Einrichtungen, z.B. von Fahrzeugen, insbesondere von Luft- oder Landfahrzeugen. Damit ist die erfindungsgemäße Schutzeinrichtung vorzugsweise in Energieversorgungsnetzen derartiger Luft- oder Landfahrzeuge einsetzbar. Die vorbeschriebenen Merkmale, insbesondere zu einer externen Steuerung, ermöglichen dabei einen sehr flexiblen Einsatz auch im Rahmen übergeordneter Überwachungsund/oder Energieverteilungssteuereinrichtungen, sogenannter Energie-Managementsysteme, für die Energieversorgungsnetze der genannten Luft- oder Landfahrzeuge. In allen diesen Anwendungsfällen wird bevorzugt die Versorgungsspannung unmittelbar als Messgleichspannung herangezogen und überwacht.

Eine andere Ausführungsform der erfindungsgemäßen Schutzeinrichtung ist gekennzeichnet durch eine Gleichrichteranordnung zum Gewinnen der Messgleichspannung aus der Versorgungsspannung durch Gleichrichtung. Damit lassen sich auf einfache Weise auch wenigstens einen Wechselspannungsanteil enthaltende Versorgungsspannungen überwachen. Vorteilhaft ist damit die erfindungsgemäße Schutzeinrichtung auch in Wechselspannungs-Energieversorgungsnetzen einsetzbar, wobei die Anwendung vom industriellen Einsatz sowohl in ortsfesten als auch mobilen Einrichtungen bis zu Haushaltsinstallationen reicht und damit sehr universell und flexibel ist.

In einer vorteilhaften Weiterbildung der erfindungsgemäßen Schutzeinrichtung ist die wenigstens eine Schalteinrichtung, bevorzugt die wenigstens eine Lastschalteinrichtung, besonders bevorzugt der wenigstens eine, insbesondere elektromagnetische, Lastschalter, mit einer Überstrom-Zeitschutzschalteinrichtung in Reihenschaltung angeordnet. Eine derartige Überstrom-Zeitschutzschalteinrichtung ist besonders bevorzugt gebildet durch eine herkömmliche Leitungssicherung, insbesondere durch einen herkömmlichen Sicherungsautomaten. Bei diesen erfolgt eine Auslösung regelmäßig dadurch, dass ein bestimmter Überstrom, der einem vorgebbaren Vielfachen eines in einer zu sichernden Leitung eines Energieversorgungsnetzes zulässigen Nennstroms entspricht, über die Dauer eines vorgebbaren Zeitintervalls hinweg fließt. Bei Haushalts-Sicherungsautomaten liegt dieser Überstrom z.B. in der Größenordnung des Zwei- bis Dreifachen des Nennstroms und das Zeitintervall bei einigen Sekundenbruchteilen. Auf diese Weise ist die erfindungsgemäße Schutzeinrichtung sehr einfach, wirkungsvoll und universell um eine Überstromschutzfunktion ergänzbar.

Die oben genannte Aufgabe wird weiterhin gelöst durch eine Energiequelle, die durch eine Schutzeinrichtung der vorbeschriebenen Art gekennzeichnet ist. Die Energiequelle ist zum Abgeben einer Wechselspannung als Versorgungsspannung oder bevorzugt einer Versorgungsgleichspannung eingerichtet.

Besonders vorteilhaft ist die erfindungsgemäße Schutzeinrichtung mit einer Energiequelle einsetzbar, die eine geringe Überstromfähigkeit aufweist. Dabei kann diese eine geringe Überstromfähigkeit aufweisende Energiequelle sowohl zum Abgeben einer Wechselspannung als Versorgungsspannung als auch einer Versorgungsgleichspannung eingerichtet sein. Als Überstromfähigkeit wird die Fähigkeit der Energiequelle bezeichnet, einen über einen Nennstrom, zu dessen Lieferung die Energiequelle dimensioniert und mit dem sie bestimmungsgemäß betreibbar ist, hinausgehenden Strom, d.h. Überstrom, zu liefern. Als gering in diesem Zusammenhang wird die Überstromfähigkeit bezeichnet, wenn sie nicht ausreicht, um eine Überstrom-Zeitschutzschalteinrichtung der vorstehend beschriebenen Art auszulösen, wenn diese auf den Nennstrom der Energiequelle ausgelegt ist. Eine solche Überstrom-Zeitschutzschalteinrichtung ist als Netzschutz für eine Energiequelle, die eine derartige, geringe Überstromfähigkeit aufweist, nicht einsetzbar.

Bei einer derartigen Energiequelle nimmt jedoch die Versorgungsspannung schon beim Liefern eines den Nennstrom nur wenig überschreitenden Stroms deutlich ab, d.h. eine solche Energiequelle weist eine im Bereich des Nennstroms stark fallende Kennlinie der Versorgungsspannung über dem abgegebenen Strom auf. Vorteilhaft ist die mit dieser Energiequelle verbundene, erfindungsgemäße Schutzeinrichtung derart dimensioniert, dass durch den ersten Schwellenwert für die Messgleichspannung ein gewünschter zulässiger Betriebsbereich der Energiequelle über deren Kennlinie auch für den von der Energiequelle gelieferten Strom eingestellt wird, dass also mittels des ersten Schwellenwerts über die Kennlinie ein Wert für den Überstrom einstellbar ist, bei dem die Unterspannungs-Überwachungseinrichtung eine Unterspannung detektiert und damit die Schutzeinrichtung ausgelöst wird, d.h. die Verbindung zwischen der Energiequelle und der wenigstens einen Last unterbrochen wird. Auf diese Weise ist für Energiequellen mit den beschriebenen Eigenschaften, d.h. insbesondere für Energiequellen mit der beschriebenen geringen Überstromfähigkeit, ein sehr einfacher, sicherer und präziser Überstromschutz ohne weiteren Schaltungsaufwand erzielbar. Die erfindungsgemäße Schutzeinrichtung ist somit besonders vorteilhaft zum Bilden eines primärschutzfähigen Schutzes für Energiequellen mit geringer Überstromfähigkeit einsetzbar, wobei die geringe Überstromfähigkeit gleichbedeutend ist mit einer geringen Kurzschlussleistung der Energiequelle, da diese im Kurzschlussfall nur einen geringen Kurzschlussstrom bei einer geringen Versorgungsspannung abzugeben in der Lage ist.

Energiequellen mit der beschriebenen geringen Überstromfähigkeit sind insbesondere Quellen mit geringen Kurzschlussströmen, wie vorzugsweise Brennstoffzellen oder Photovoltaikanlagen, aber auch geregelte Energiequellen mit Strombegrenzung. Die erfindungsgemäße Schutzeinrichtung ist besonders vorteilhaft einsetzbar als primärer Netzschutz für Energieversorgungsnetze, die aus derartigen Energiequellen gespeist werden.

Die oben genannte Aufgabe wird außerdem gelöst durch ein Energieversorgungsnetz mit wenigstens einer Schutzeinrichtung und/oder wenigstens einer Energiequelle der vorbeschriebenen Art. Schließlich wird die oben genannte Aufgabe gelöst durch eine Verwendung einer Schutzeinrichtung der vorbezeichneten Art für ein Zusammenwirken als Überstromschutzeinrichtung mit einer Energiequelle mit einer geringen Überstromfähigkeit, wie sie vorstehend beschrieben ist, vorzugsweise mit einer Brennstoffzelle und/oder einer Photovoltaikanlage. Dies ermöglicht die Bereitstellung eines in der vorstehend beschriebenen Weise vorteilhaft ausgebildeten primären Netzschutzes für derartige Energieversorgungsnetze.

**Kurze Beschreibung der Zeichnungen**

In der Zeichnung, in der übereinstimmende Elemente in allen Figuren mit denselben Bezugszeichen versehen sind und zu der auf eine wiederholte Beschreibung dieser Elemente verzichtet wird, zeigen:

Figur 1 ein erstes Ausführungsbeispiel der erfindungsgemäßen Schutzeinrichtung in blockschematischer Darstellung,
Figur 2 ein detailliertes Schaltbild eines Aufbaus des ersten Ausführungsbeispiels der erfindungsgemäßen Schutzeinrichtung,
Figur 3 ein grob schematisches Diagramm zur Erläuterung der Funktion der Schaltungsanordnung nach Figur 2,
Figur 4 ein zweites Ausführungsbeispiel der erfindungsgemäßen Schutzeinrichtung für einen Einsatz in einem Wechselspannungsnetz als Abwandlung des ersten Ausführungsbeispiels gemäß Figur 1 in blockschematischer Darstellung,

Figur 5 eine blockschematische Darstellung eines Anschlusses einer Energiequelle, hier beispielhaft einer Brennstoffzelle mit einem Gleichspannungswandler, über eine erfindungsgemäße Schutzeinrichtung an ein Energieversorgungsnetz,

Figur 6 eine blockschematische Darstellung eines Anschlusses zweier Energiequellen, hier beispielhaft zweier Brennstoffzellen mit je einem Gleichspannungswandler, über je eine erfindungsgemäße Schutzeinrichtung an ein Energieversorgungsnetz,

Figur 7 ein Beispiel für eine Anordnung einer erfindungsgemäßen Schutzeinrichtung nach dem ersten oder dem zweiten Ausführungsbeispiel in Reihenschaltung mit einer herkömmlichen Überstrom-Zeitschutzschalteinrichtung als zusätzlicher Schutzeinrichtung in einem standardisierten Gehäuse eines Sicherungsautomaten,

Figur 8 ein Beispiel für eine Anordnung einer erfindungsgemäßen Schutzeinrichtung nach dem ersten oder dem zweiten Ausführungsbeispiel als einziger Schutzeinrichtung in einem standardisierten Gehäuse eines Sicherungsautomaten,

Figur 9 das erste Ausführungsbeispiel der erfindungsgemäßen Schutzeinrichtung nach Figur 1, eingesetzt zur Steuerung weiterer Schalter, insbesondere Lastschalter, und

Figur 10 ein schematisch dargestelltes Beispiel einer Strom-Spannungs-Kennlinie, d.h. einer Kennlinie einer abgegebenen Versorgungsspannung über einem abgegebenen Strom, einer Energiequelle mit geringer Überstromfähigkeit, hier einer Brennstoffzelle.

Die in der Zeichnung dargestellten Ausführungsbeispiele der Erfindung werden im nachfolgenden näher beschrieben.

**Bevorzugt Ausführungsform der Erfindung**

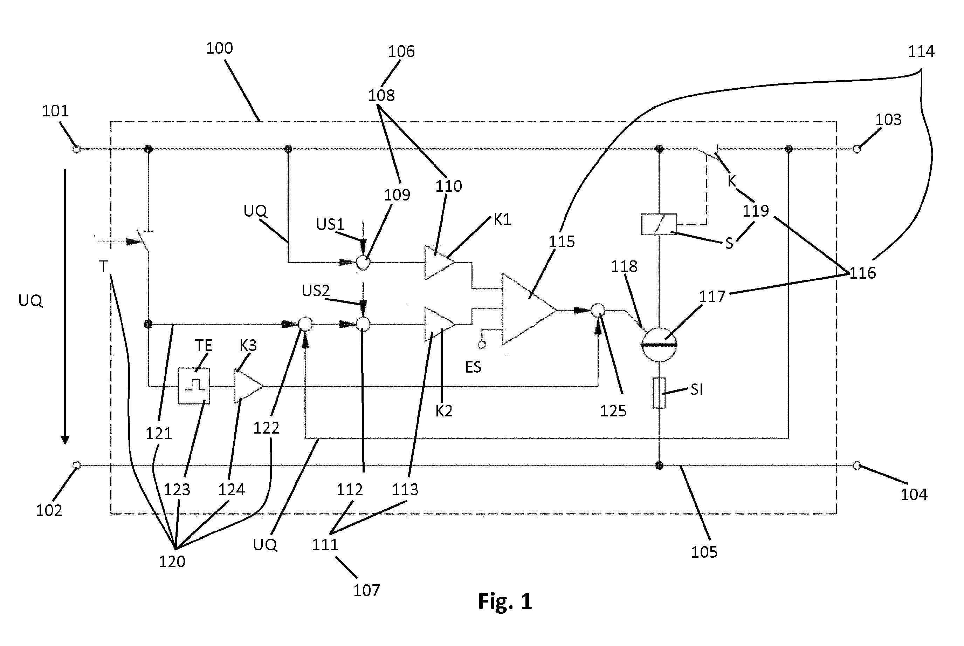

In Figur 1 ist mit dem Bezugszeichen 100 ein erstes Ausführungsbeispiel der erfindungsgemäßen Schutzeinrichtung in blockschematischer Darstellung wiedergegeben. Die Schutzeinrichtung 100 weist einen ersten und einen zweiten Eingangsanschluss 101 und 102 zum Anschließen an eine Energiequelle und einen ersten und einen zweiten Ausgangsanschluss 103 und 104 zum Anschließen wenigstens einer Last auf. Dabei ist der erste Eingangsanschluss 101 zum Verbinden mit einem Pluspol der Energiequelle und ist der erste Ausgangsanschluss 103 zum Verbinden mit einem Pluspol der Last eingerichtet; der zweite Eingangsanschluss 102 und der zweite Ausgangsanschluss 104 sind mit einer Masseleitung 105 verbunden. Über die Eingangsanschlüsse 101, 102 ist der Schutzeinrichtung 100 eine Versorgungsspannung UQ der Energiequelle als Messgleichspannung zuführbar.

Die Schutzeinrichtung 100 umfasst eine Unterspannungs-Überwachungseinrichtung 106 zum Detektieren, ob die Messgleichspannung UQ einen ersten Schwellenwert US1 unterschreitet, und eine Überspannungs-Überwachungseinrichtung 107 zum Detektieren, ob die Messgleichspannung UQ einen zweiten Schwellenwert US2 überschreitet. Die Unterspannungs-Überwachungseinrichtung 106 ist dazu mit einer ersten Schwellenwertschaltung 108 ausgebildet, die eine erste Addierstufe 109 und eine erste Proportionalstufe 110 umfasst. In der ersten Addierstufe 109 wird die Messgleichspannung UQ mit dem ersten Schwellenwert US1 verglichen. Unterschreitet die Messgleichspannung UQ den ersten Schwellenwert US1, wird ein erstes Abschaltsignal über die erste Proportionalstufe 110 mit einem ersten Proportionalfaktor K1 abgegeben. Die Überspannungs-Überwachungseinrichtung 107 ist mit einer zweiten Schwellenwertschaltung 111 ausgebildet, die eine zweite Addierstufe 112 und eine zweite Proportionalstufe 113 umfasst. In der zweiten Addierstufe 112 wird die Messgleichspannung UQ mit dem zweiten Schwellenwert US2 verglichen. Überschreitet die Messgleichspannung UQ den zweiten Schwellenwert US2, wird ein zweites Abschaltsignal über die zweite Proportionalstufe 113 mit einem zweiten Proportionalfaktor K2 abgegeben.

Die Schutzeinrichtung 100 umfasst weiterhin eine von der Unterspannungs-Überwachungseinrichtung 106 und der Überspannungs-Überwachungseinrichtung 107 gesteuerte Schalteinrichtung 114 zum Herstellen einer elektrischen Verbindung zwischen der Energiequelle und der Last, wenn die Messgleichspannung UQ mindestens dem ersten US1 und höchstens dem zweiten Schwellenwert US2 entspricht. Die Schalteinrichtung 114 ist mit einer Komparatoranordnung 115, bevorzugt einer Differenzverstärkeranordnung, ausgebildet und umfasst weiterhin eine von der Komparatoranordnung 115 steuerbare Lastschalteinrichtung 116, die wiederum eine steuerbare Stromquellenanordnung 117 und einen von der Stromquellenanordnung 117 durch Zuführen eines Steuerstroms über einen Steueranschluss 118 der Stromquellenanordnung 117 steuerbaren, insbesondere elektromagnetischen, Lastschalter 119, hier ein Relais, umfasst. Das Relais 119 ist mit einer Relaisspule S und einem Schaltkontakt K ausgebildet. Die Relaisspule S ist mit der Stromquellenanordnung 117 gekoppelt, und über den Schaltkontakt K ist eine Verbindung zwischen dem ersten Eingangsanschluss 101 und dem ersten Ausgangsanschluss 103 herstellbar, die eine elektrische Verbindung zwischen der Energiequelle und der Last bildet. Eine Sicherung SI ist in Reihe zur steuerbaren Stromquellenanordnung 117 geschaltet und dient zum Schutz der Relaisspule S und zum Schutz gegen Fehler in der Schutzeinrichtung 100.

Die von den Schwellenwertschaltungen 108, 111 an die Schalteinrichtung 114 dann gelieferten Abschaltsteuersignale, wenn die Messgleichspannung UQ

den ersten Schwellenwert US1 unterschreitet bzw. den zweiten Schwellenwert US2 überschreitet, steuern die Komparatoranordnung 115 in einen zweiten Schaltzustand; ansonsten nimmt die Komparatoranordnung 115 einen ersten Schaltzustand ein. Die Stromquellenanordnung 117 wird von der Komparatoranordnung 115 derart gesteuert, dass der Steuerstrom dem Lastschalter 119 über den Steueranschluss 118 im ersten Schaltzustand der Komparatoranordnung 115 zuführbar ist und in deren zweitem Schaltzustand unterbrochen ist. Im ersten Schaltzustand der Komparatoranordnung 115 wird somit der Relaisspule S aus der Stromquellenanordnung 117 ein Strom zugeführt und damit über den Schaltkontakt K die elektrische Verbindung zwischen der Energiequelle und der Last hergestellt. Tritt ein Abschaltsteuersignal auf, geht die Komparatoranordnung 115 in den zweiten Schaltzustand über, der Strom durch die Relaisspule wird abgeschaltet und die elektrische Verbindung zwischen der Energiequelle und der Last über ein Öffnen des Schaltkontakts K unterbrochen.

Grundsätzlich benötigt das Relais 119 nur einen Schaltkontakt K. Zur Erhöhung der Zuverlässigkeit kann jedoch ein zweites Relais hinzugefügt werden, dessen Relaisspule mit der Relaisspule S in Reihe geschaltet ist und dessen Schaltkontakt mit dem Schaltkontakt K in Reihe angeordnet ist. Sofern eines der Relais versagt, insbesondere "klebt", wird das Unterbrechen der elektrischen Verbindung zwischen der Energiequelle und der Last noch zuverlässig durch das zweite Relais vorgenommen.

Bei der Schutzeinrichtung 100 werden die Unterspannungs-Überwachungseinrichtung 106, die Überspannungs-Überwachungseinrichtung 107 und die Schalteinrichtung 114 ausschließlich aus der von der Energiequelle abgebbaren Versorgungsspannung, d.h. der Messgleichspannung, UQ gespeist. Damit ist diese Schutzeinrichtung 100 als primärer Netzschutz einsetzbar.

Die Schutzeinrichtung 100 umfasst weiterhin eine Einschaltstufe 120, der ein Einschaltsignal durch eine externe Wirkverbindung zuführbar ist, die hier durch einen von einem Nutzer manuell extern bedienbaren Taster T gebildet ist. Durch das Einschaltsignal, hier einen mit dem Taster T auslösbaren Einschaltimpuls, wird die Schalteinrichtung 114 aus einem zweiten Steuerzustand, in dem die elektrische Verbindung zwischen der Energiequelle und der Last unterbrochen ist, in einen ersten Steuerzustand, in dem diese elektrische Verbindung hergestellt ist, überführt. Dabei ist der erste Steuerzustand der Schalteinrichtung 114 gleichbedeutend mit dem Steuerzustand, in den die Schalteinrichtung 114 durch die Komparatoranordnung 115 in deren erstem Schaltzustand überführt wird, und ist der zweite Steuerzustand der Schalteinrichtung 114 gleichbedeutend mit dem Steuerzustand, in den die Schalteinrichtung 114 durch die Komparatoranordnung 115 in deren zweitem Schaltzustand überführt wird.

In der Schutzeinrichtung 100 wird die Messgleichspannung UQ der zweiten Addierstufe 112 der zweiten Schwellenwertschaltung 111 über den Schaltkontakt K und somit erst nach Herstellen der elektrischen Verbindung zwischen Energiequelle und Last zugeführt. Vor dem Einschalten durch Zuführen des Einschaltsignals über den Taster T liegt also die Messgleichspannung UQ an der zweiten Schwellenwertschaltung 111 noch nicht an. Sie wird daher einerseits über den Schaltkontakt K und andererseits durch den Taster T über eine Verbindung 121 einer Verknüpfungsstufe 122 zugeführt und von dieser der zweiten Addierstufe 112 zugeleitet. Damit steht die Messgleichspannung UQ auch zum Einschalten der Schutzeinrichtung an der Überspannungs-Überwachungseinrichtung 107 zur Verfügung. Andererseits kann so erreicht werden, dass bei geöffnetem Schaltkontakt K und somit Fehlen der Messgleichspannung UQ an der Überspannungs-Überwachungseinrichtung 107 stets ein Abschaltsteuersignal erzeugt wird und der Schaltkontakt K sicher geöffnet bleibt, solange kein Einschaltsignal erzeugt wird. Dies schafft eine Sicherheit gegen unbeabsichtigte Inbetriebnahme oder auch Wiederinbetriebnahme der Schutzeinrichtung 100 und der über sie gespeisten Last.

Die Einschaltstufe 120 umfasst weiterhin eine Impulsformstufe 123, die beim Schließen des Tasters T einen Schaltimpuls einer Zeitdauer TE formt. Der Schaltimpuls der Zeitdauer TE wird über eine dritte Proportionalstufe 124 mit einem Faktor K3 einer weiteren Verknüpfungsstufe 125 zugeleitet und bildet auf diesem Weg zusätzlich zum Ausgangssignal der Komparatoranordnung 115 den Steuerstrom für die Stromquellenanordnung 117. Mit diesem Schaltimpuls wird für die Zeitdauer TE während des Einschaltens der Schutzeinrichtung 100 die Stromquellenanordnung 117 auf einen höheren Strom für die Relaisspule S umgeschaltet, um ein sicheres Anziehen des Relais 119 zu gewährleisten. Nach dem Ende des Schaltimpulses wird die Stromquellenanordnung 117 auf einen niedrigeren Strom geschaltet, der zum Halten des Relais 119 ausreicht.

Die Komparatoranordnung, d.h. die Differenzverstärkeranordnung, 115 weist einen weiteren Eingang für ein weiteres, insbesondere extern zuführbares, Steuersignal ES auf. Das weitere Steuersignal ES dient zum Steuern des Steuerzustands der Schalteinrichtung 114 über den Schaltzustand der Komparatoranordnung 115. Insbesondere ist das weitere Steuersignal ES ein weiteres Abschaltsteuersignal, durch das die Komparatoranordnung 115 in den zweiten Schaltzustand steuerbar ist. Damit lässt sich von der Schutzeinrichtung 100 eine weitere Schutzfunktion erfüllen, z.B. ein Abschalten bei einer Überhitzung eines Teils des Energieversorgungsnetzes, wenn das weitere Steuersignal von einem Temperatursensor geliefert wird. Auch andere Betriebsparameter repräsentierende weitere Steuersignale ES sind möglich.

Die Schutzeinrichtung 100 ist einfach und robust aufgebaut und ermöglicht ein präzise determiniertes Abschalten der Last von der Energiequelle im Fehlerfall.

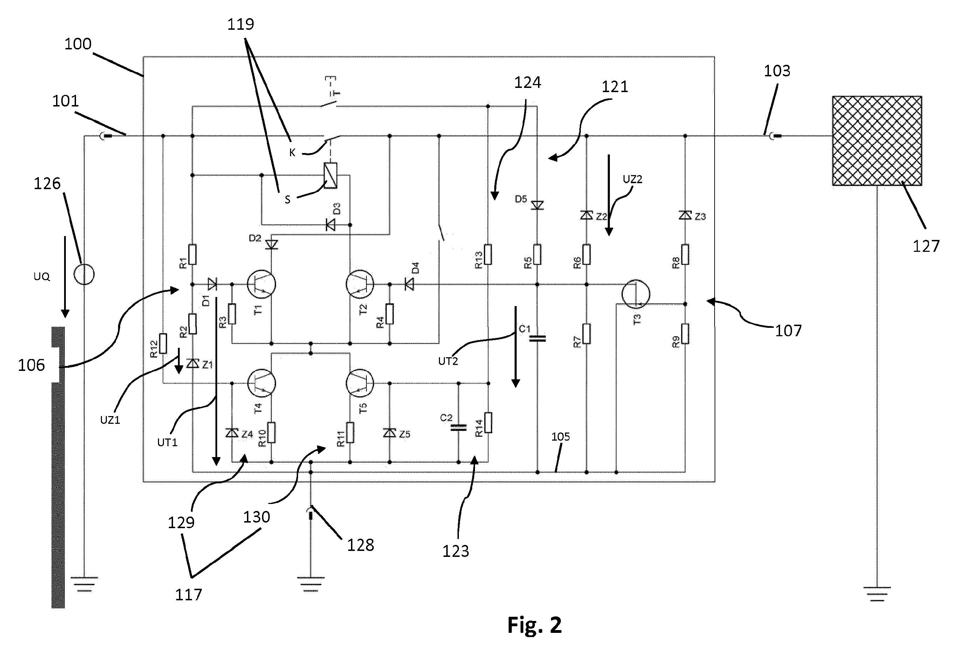

Figur 2 zeigt ein detailliertes Schaltbild eines Aufbaus des ersten Ausführungsbeispiels der erfindungsgemäßen Schutzeinrichtung 100. In Figur 2 ist die Schutzeinrichtung 100 in einer Beschaltung mit der Energiequelle 126 und einem Energieversorgungsnetz 127, das auch wenigstens eine Last umfasst, dargestellt. In dieser Darstellung sind der zweite Eingangsanschluss 102 und der zweite Ausgangsanschluss 104 der Schutzeinrichtung 100 an der Masseleitung 105 zu einem gemeinsamen Masseanschluss 128 der Schutzeinrichtung 100 zusammengefasst. Auch die Energiequelle 126 und das Energieversorgungsnetz 127 sind gegen Masse geschaltet. Dadurch weist die Schutzeinrichtung 100 zusammen mit dem ersten Eingangsanschluss 101 und dem ersten Ausgangsanschluss 103 nur drei Anschlüsse auf, die als lösbare Anschlüsse, her insbesondere als Steckverbindungen, ausgestaltet und eingezeichnet sind.

In der Ausführungsform der Schutzeinrichtung 100 nach Figur 2 ist die Unterspannungs-Überwachungseinrichtung 106 gebildet durch einen ersten Transistor T1, dessen Basisanschluss außer mit einem dritten Widerstand R3 als Basis-Emitter-Widerstand noch mit einer Reihenschaltung aus einem ersten Widerstand R1, einem zweiten Widerstand R2 und einer ersten Zenerdiode Z1 verbunden ist, und zwar mit einer Anzapfung zwischen dem ersten Widerstand R1 und dem zweiten Widerstand R2 über eine erste Diode D1. Eine zweite Diode D2 befindet sich im Kollektorkreis des ersten Transistors T1. Durch die Durchbruchspannung UZ1 der ersten Zenerdiode Z1 wird der erste Schwellenwert US1 für die Messgleichspannung UQ in der nachfolgend noch näher erläuterten Weise bestimmt. Der erste Proportionalfaktor K1 bestimmt sich aus dem Verhältnis der Widerstandswerte der Widerstände R1, R2 zu

$$K1 = R2 \,/\, (R1 + R2).$$

Die Schaltungsanordnung nach Figur 2 umfasst weiterhin einen zweiten Transistor T2, der wie auch der erste Transistor T1 als Bipolartransistor dargestellt, aber wie jener auch als Feldeffekttransistor ausgebildet sein kann und der mit einem vierten Widerstand R4 als Basis-Emitter-Widerstand sowie einer Reihenschaltung aus einer zweiten Zenerdiode Z2, die eine Durchbruchspannung UZ2 aufweist, durch die im Zusammenwirken mit der Durchbruchspannung UZ1 der ersten Zenerdiode Z1 der erste Schwellenwert US1 für die Messgleichspannung UQ in der nachfolgend noch näher erläuterten Weise bestimmt wird, einem sechsten Widerstand R6 und einem siebten Widerstand R7 beschaltet ist, wobei eine Anzapfung dieser Reihenschaltung zwischen dem sechsten und dem siebten Widerstand R6, R7 über eine vierte Diode D4 an den Basisanschluss des zweiten Transistors T2 geführt ist. Parallel zum siebten Widerstand R7 ist ein erster Kondensator C1 angeordnet. Der zweite Proportionalfaktor K2 bestimmt sich aus dem Verhältnis der Widerstandswerte der Widerstände R6, R7 zu

$$K2 = R7 \,/\, (R6 + R7).$$

In der Ausführungsform der Schutzeinrichtung 100 nach Figur 2 ist ferner die Überspannungs-Überwachungseinrichtung 107 gebildet durch einen dritten Transistor T3, der hier zur Verringerung des Stromverbrauchs als Feldeffekttransistor ausgestaltet ist. Der Hauptstrompfad des dritten Transistors T3 überbrückt die Parallelschaltung aus erstem Kondensator C1 und siebtem Widerstand R7. Ein Steueranschluss - hier: Gateanschluss - des dritten Transistors T3 ist an eine Anzapfung einer Reihenschaltung aus einer dritten Zenerdiode Z3, einem achten Widerstand R8 und einem neunten Widerstand R9 geführt. Die Durchbruchspannung der dritten Zenerdiode bestimmt den zweiten Schwellenwert US2 für die Messgleichspannung UQ.

In der Schaltungsanordnung nach Figur 2 ist weiterhin die steuerbare Stromquellenanordnung 117 ausgestaltet mit einer Haltestromquelle 129 zum Liefern eines Haltestroms als Steuerstrom an den Lastschalter 119 zum Aufrechterhalten des ersten Steuerzustands und mit einer Einschaltstromquelle 130 zum Liefern eines zusätzlichen Einschaltstroms für das Einschalten, d.h. das Überführen des Lastschalters 119 in den ersten Steuerzustand. Die Haltestromquelle 129 umfasst einen vierten Transistor T4 mit einem einen Emitterwiderstand bildenden zehnten Widerstand R10. Der Basisanschluss des vierten Transistors T4 ist an eine Anzapfung einer Reihenschaltung aus einem zwölften Widerstand R12 und einer vierten Zenerdiode Z4 geführt, deren Durchbruchspannung zusammen mit den genannten Widerständen R10, R12 den Haltestrom bestimmt. Die Einschaltstromquelle 130 umfasst einen fünften Transistor T5 mit einem einen Emitterwiderstand bildenden elften Widerstand R11. Der Basisanschluss des fünften Transistors T5 ist an eine Anzapfung einer Reihenschaltung aus einem dreizehnten Widerstand R13 und einer fünften Zenerdiode Z5 geführt. Parallel zur fünften Zenerdiode Z5 und der Reihenschaltung aus dem elften Widerstand R11 und der Basis-Emitter-Strecke des fünften Transistors T5 liegen ein zweiter Kondensator C2 und ein vierzehnter Widerstand R14. Die Durchbruchspannung der fünften Zenerdiode Z5 bestimmt zusammen mit den genannten Widerständen R11, R13 und R14 den zusätzlichen Einschaltstrom. Der zweite Kondensator bildet mit den Widerständen R11 und insbesondere R14 ein Zeitglied, d.h. hier die Impulsformstufe 123, die die Dauer TE des Zeitintervalls, währenddessen die Einschaltstromquelle 130 beim Einschalten der Schutzeinrichtung 100 zugeschaltet wird, bestimmt.

Die Einschaltstufe 120 wird in der Schaltungsanordnung nach Figur 2 gebildet durch den Taster T und Verbindungen einerseits über einen fünften Widerstand R5 und eine dazu in Reihe angeordnete fünfte Diode D5, die als Schutzdiode eine Entladung des ersten Kondensators C1 über den dreizehnten Widerstand R13 verhindert, zum Basisanschluss des zweiten Transistors T2 und andererseits über den dreizehnten Widerstand R13 an den Basisanschluss des fünften Transistors T5. Der erste und der zweite Transistor T1, T2 bilden einen Differenzverstärker und damit den Kern der Komparatoranordnung 115. Die Verbindung des Tasters T zum Basisanschluss des zweiten Transistors T2 stellt somit die Verbindung 121 in der Einschaltstufe 120 dar. Die Verbindung des Tasters T zum Basisanschluss des fünften Transistors T5 stellt die Verbindung zur Impulsformstufe 123 dar; die dritte Proportionalstufe 124 ist durch die Widerstände R13, R14 gebildet.

Eine dritte Diode D3 dient als Freilauf- bzw. Schutzdiode für die Relaisspule S und ist dazu parallel angeordnet.

In Figur 2 ist die Schaltungsanordnung im zweiten Schaltzustand bzw. im zweiten Steuerzustand gezeigt, der auch als Ruhezustand bezeichnet wird und bei dem Energiequelle 126 und Energieversorgungsnetz 127 voneinander getrennt sind. Durch Betätigen des Tasters T wird über den fünften Widerstand R5 der erste Kondensator C1 geladen. Wenn die Versorgungsspannung, d.h. die Messgleichspannung, UQ ausreicht, wird der zweite Transistor T2 durchgesteuert. Das Relais 119 betätigt den Schaltkontakt K. Damit bleibt der zweite Transistor T2 auch nach Freigeben des Tasters T durchgesteuert, weil über die vierte Diode D4 und den sechsten Widerstand R6 ein Basisstrom durch den zweiten Transistor T2 fließen kann.

Der Gesamtstrom durch die Hauptstrompfade, d.h. hier die Kollektor-Emitter-Strecken, des ersten T1 und des zweiten T2, gemeinsam einen Differenzverstärker bildenden Transistors ist durch die an den gemeinsamen Emitteranschluss gekoppelte Stromquellenanordnung 117 begrenzt. Dadurch werden nicht nur die Transistoren T1 und T2 vor Überströmen geschützt, sondern auch die Relaisspule S. Um ein sicheres Einschalten des Relais 119 zu gewährleisten, liefert die Stromquellenanordnung 117 beim Betätigen des Tasters T den höheren Einschaltstrom an das Relais 119. Nach Öffnen des Tasters T fließt nur noch der zum Halten des Relais 119 notwendige Haltestrom durch die Stromquellenanordnung 117.

Der aus dem ersten Widerstand R1 und dem zweiten Widerstand R2 gebildete Spannungsteiler hat ein niedrigeres Spannungsteilerverhältnis, d.h. einen niedrigeren Proportionalfaktor K1, als der aus dem sechsten Widerstand R6 und dem siebten Widerstand R7 gebildete Spannungsteiler, der den Proportionalfaktor K2 aufweist, d.h. es ist für die Dimensionierung der Schutzeinrichtung gewählt:

$$K1 < K2.$$

Für diese Erläuterung sind die Fluss-Spannungen der Dioden, insbesondere der ersten und der vierten Diode D1, D4, vernachlässigt. Der durch den sechsten und den siebten Widerstand R6, R7 gebildete Spannungsteiler erhält als Eingangsspannung die um die Durchbruchspannung UZ2 der zweiten Zenerdiode Z2 reduzierte Versorgungsspannung bzw. Messgleichspannung UQ. Die Ausgangsspannung des durch den sechsten und den siebten Widerstand R6, R7 gebildeten Spannungsteilers speist den Basisanschluss des zweiten Transistors T2. Dadurch kann bei genügend kleinen Messgleichspannungen UQ am Basisanschluss des ersten Tansistors T1 eine Spannung UT1 auftreten, die höher ist als die Spannung UT2 am Basisanschluss des zweiten Transistors T2. In diesem Fall leitet der erste Transistor T1 und sperrt der zweite Transistor T2. Damit kann der durch die Stromquellenanordnung 117 gelieferte Strom wenigstens nahezu vollständig durch den ersten Transistor T1 übernommen werden, wohingegen der zweite Transistor T2 wenigstens nahezu stromlos wird. Damit wird auch die an den Kollektoranschluss des zweiten Transistors T2 angeschlossene Relaisspule S wenigstens nahezu stromlos, wodurch das Relais 119 abfällt. Das Relais bleibt abgefallen, weil das Energieversorgungsnetz 127 von der Energiequelle 126 bei abgefallenen Relais 119 und damit unterbrochenem Schaltkontakt K abgetrennt wird, die Spannung im Energieversorgungsnetz 127 zusammenbricht und damit kein Basisstrom in den zweiten Transistor T2 fließt.

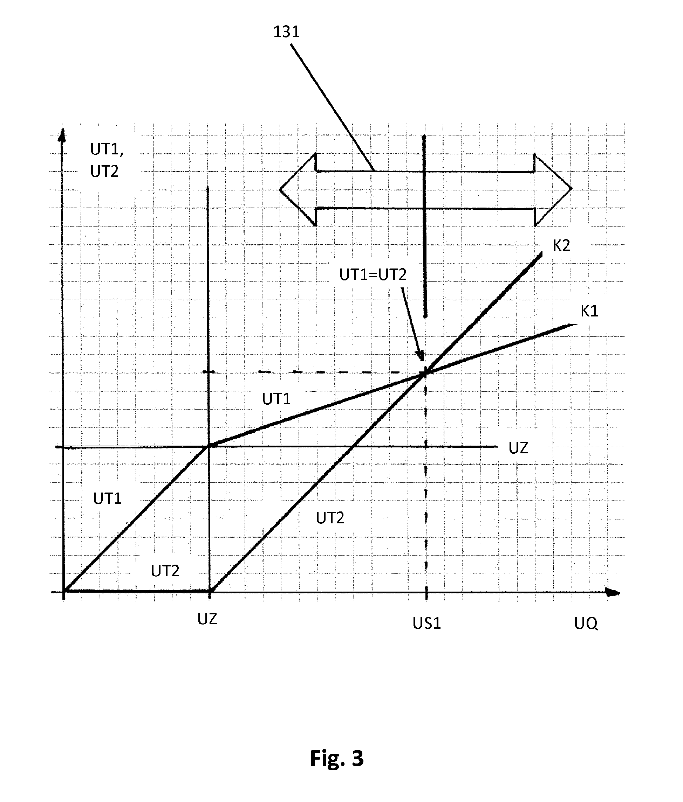

Die Spannungen UT1, UT2 an den Basisanschlüssen des ersten bzw. des zweiten Transistors T1, T2 in Abhängigkeit von der Messgleichspannung UQ sind grob schematisch in dem in Figur 3 dargestellten Diagramm wiedergegeben, wobei der Einfachheit halber die Durchbruchspannungen der ersten und der zweiten Zenerdiode Z1, Z1 gleichgesetzt sind:

$$UZ1 = UZ2 = UZ.$$

Solange die Messgleichspannung UQ kleiner als die Durchbruchspannung UZ ist, bleibt die Spannung UT2 Null und die Spannung UT1 folgt unmittelbar der Messgleichspannung UQ. Oberhalb der Durchbruchspannung UZ haben die Verläufe der Spannungen UT1, UT2 die Steigungen gemäß den Proportionalitätsfaktoren K1 bzw. K2. Der erste Schwellenwert US1 ergibt sich am Schnittpunkt der Verläufe der über der Messgleichspannung UQ aufgetragenen Spannungen UT1, UT2, d. h. am Punkt

$$UT1 = UT2.$$

Symbolisiert durch einen Doppelpfeil 131 sind in Figur 3 links der Bereich unzulässiger Unterspannung und rechts der zulässige Spannungsbereich der Messgleichspannung UQ.

Bei Messgleichspannungen UQ oberhalb des zweiten Schwellenwerts US2 wird der dritte Transistor T3 über die dritte Zenerdiode Z3 durchgeschaltet. Dadurch wird die Spannung UT2 am Basisanschluss des zweiten Transistors T2 reduziert, so dass das Relais 119 auch in diesem Fall abfällt. Auch in diesem Fall bleibt der abgefallene Zustand erhalten.

Die Zenerdioden Z1 bis Z5 bilden verallgemeinert Spannungsreferenzen. Es können dafür in einer Abwandlung der Schutzeinrichtung 100 z.B. auch äquivalent wirkende integrierte Schaltungen eingesetzt werden, auch solche, die einstellbare Referenzspannungen haben.

Um ein ungewolltes Abfallen des Relais 119 und damit Öffnen des Schaltkontakts K durch kurzzeitige Spannungseinbrüche, Überspannungen auf dem Energieversorgungsnetz 127 oder dergleichen zu vermeiden, ist der erste Kondensator C1 im Basiskreis des zweiten Transistors T2 eingesetzt. Vorteilhaft ist, dass der erste Kondensator C1 nicht direkt der Versorgungsspannung UQ ausgesetzt ist und zum Erzielen einer ausreichenden Zeitkonstante nur geringe Kapazitätswerte benötigt, weil der erste Kondensator C1 mit einem im Allgemeinen hochohmigen Basisspannungsteiler aus zweiter Zenerdiode Z2 sowie sechstem und siebtem Widerstand R6, R7 zusammenwirkt.

Die Schutzeinrichtung 100 lässt sich durch Bestückungsvarianten, d.h. unterschiedliche Wahl der Dimensionierung insbesondere der Zenerdioden, aber auch der Widerstände, leicht an verschiedene Nennspannungen und Auslösespannungen, d.h. Schwellenwerte US1, US2 anpassen. Ebenso ist die Schutzschaltung 100 für einen gestaffelten Schutz einsetzbar, weil auch unterschiedliche Auslösezeiten durch z.B. Variation der Dimensionierung des ersten Kondensators C1 gewählt werden können.

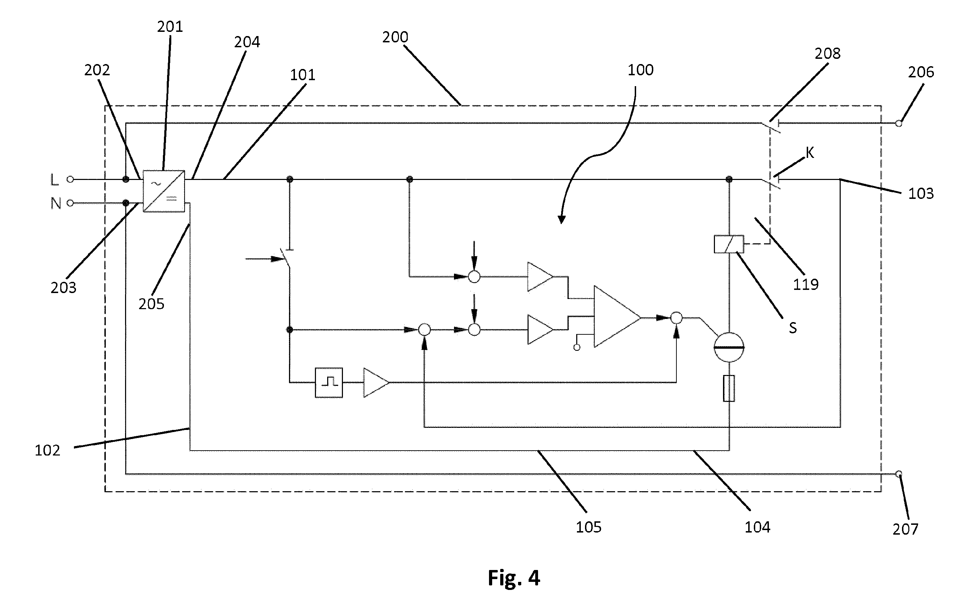

Figur 4 zeigt als zweites Ausführungsbeispiel die Schutzeinrichtung 100 gemäß Figur 1 in einer mit dem Bezugszeichen 200 bezeichneten Abwandlung für einen Einsatz in einem als Wechselspannungsnetz mit einem ersten Anschluss L und einem zweiten Anschluss N, die auch als Phasenleiter L und Nullleiter N bezeichnet werden, ausgestalteten Energieversorgungsnetz in blockschematischer Darstellung. Die Schutzeinrichtung 200 umfasst alle Schaltungselemente der Schutzeinrichtung 100 nach Figur 1. Zusätzlich ist eine Gleichrichteranordnung 201 vorgesehen, deren erster und zweiter Wechselspannungs-Eingangsanschluss 202 bzw. 203 mit dem Phasenleiter L bzw. dem Nullleiter N des Wechselspannungsnetzes verbunden sind und deren erster und zweiter Gleichspannungsanschluss 204 bzw. 205 - auch als Pluspol 204 bzw. Minuspol 205 bezeichnet - mit dem ersten Eingangsanschluss 101 bzw. dem zweiten Eingangsanschluss 102 der von der Schutzeinrichtung 200 umfassten Schutzeinrichtung 100 verbunden ist. Die Ausgangsanschlüsse 103, 104 der Schutzeinrichtung 100 sind jedoch nur intern in der beschriebenen Weise verbunden, aber nicht aus der Schutzeinrichtung 200 herausgeführt. Statt dessen bildet der Phasenleiter L einen ersten Ausgangsanschluss 206 der Schutzeinrichtung 200 und bildet der Nullleiter N einen zweiten Ausgangsanschluss 207 der Schutzeinrichtung 200, wobei zum Ausüben der Schutzfunktion, d.h. zum Abschalten der Verbindung zwischen einer Energiequelle und einer Last im Wechselspannungsnetz, das Relais 119 um einen Wechselspannungs-Schaltkontakt 208 ergänzt ist, der simultan mit dem Schaltkontakt K durch die Relaisspule S betätigt wird. Außer der Erweiterung für das Relais 119 genügt also eine einfache Gleichrichteranordnung, vorzugsweise ein standardisierter Brückengleichrichter, um die erfindungsgemäße Schutzeinrichtung auch für den Einsatz in Wechselspannungsnetzen einzurichten.

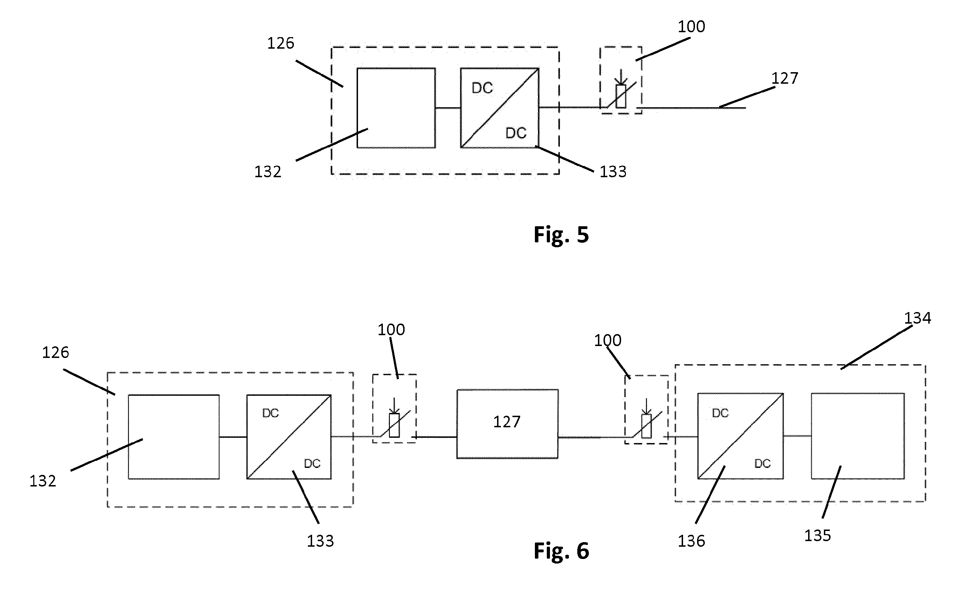

Figur 5 zeigt eine blockschematische Darstellung eines Anschlusses einer Energiequelle 126, hier beispielhaft einer Brennstoffzelle 132 mit einem durch die Buchstabenkombination DC-DC symbolisierten Gleichspannungswandler 133, über eine erfindungsgemäße Schutzeinrichtung 100 an ein Energieversorgungsnetz 127, hier nur durch dessen Anschluss symbolisch angedeutet. Die Schutzeinrichtung 100 bildet dabei den primären Netzschutz für die Energiequelle 126 und das Energieversorgungsnetz 127. Das Ausführungsbeispiel nach Figur 5 zeigt, dass die erfindungsgemäße Schutzeinrichtung 100 auch in einem Energieversorgungsnetz 127 mit einer durch einen Gleichspannungswandler 133 stabilisierten, d.h. lastabhängig geregelten, Versorgungsspannung UQ einsetzbar ist. In Abwandlung davon kann die Schutzeinrichtung 100 auch zwischen der Brennstoffzelle 132 und dem Gleichspannungswandler 133 angeordnet sein.

Figur 6 zeigt in einer weiteren Ausgestaltung des Beispiels nach Figur 5 eine blockschematische Darstellung eines Anschlusses zweier Energiequellen 126, 134, hier beispielhaft zweier Brennstoffzellen 132, 135 mit je einem Gleichspannungswandler 133, 136, über je eine erfindungsgemäße Schutzeinrichtung 100 an das Energieversorgungsnetz 127. Jede der Schutzeinrichtungen 100 dient unabhängig voneinander als primärer Netzschutz für die zugeordnete Energiequelle 126 bzw. 134. Dies verdeutlicht die Einsetzbarkeit der erfindungsgemäßen Schutzeinrichtung 100 auch in einem Energieversorgungsnetz 127 mit mehr als einer Energiequelle. In derartigen Energieversorgungsnetzen tritt regelmäßig der Fall auf, dass im Fehlerfall die Fehlerstelle im Energieversorgungsnetz von wenigstens zwei Seiten aus unterschiedlichen Energiequellen gespeist wird und demgemäß das Abschalten mehrerer Energiequellen erforderlich sein kann, um die Fehlerstelle im Energieversorgungsnetz zu isolieren. Dies wird durch die erfindungsgemäße Schutzeinrichtung zuverlässig vorgenommen. Dabei können die Energiequellen unterschiedlichen Typs sein, d.h. es können z.B. Brennstoffzellen mit Photovoltaikanlagen und konventionellen Energiequellen gemeinsam mit einem Energieversorgungsnetz verbaut sein, und das Energieversorgungsnetz selbst kann sich aus unterschiedlichen Abschnitten zusammensetzen, die z.B. mit unterschiedlichen Stromarten und Spannungen betrieben werden. Durch die universelle Einsetzbarkeit der erfindungsgemäßen Schutzeinrichtung ist auch für derartige Mischsysteme der primäre Netzschutz sichergestellt.

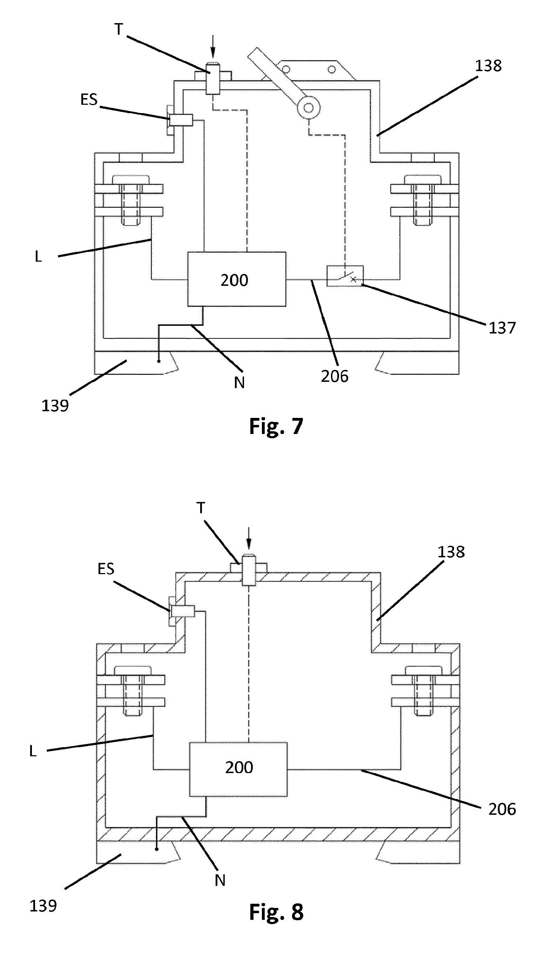

In Figur 7 ist ein Beispiel für eine Anordnung einer erfindungsgemäßen Schutzeinrichtung in Reihenschaltung mit einer herkömmlichen Überstrom-Zeitschutzschalteinrichtung 137 als zusätzlicher Schutzeinrichtung in einem standardisierten Gehäuse 138 eines Sicherungsautomaten schematisch wiedergegeben. Als Beispiel ist eine Schutzeinrichtung 200 nach dem zweiten Ausführungsbeispiel für eine Verwendung in einem Wechselspannungsnetz eingesetzt. In gleicher Weise ist eine Anordnung mit einer Schutzeinrichtung 100 nach dem ersten Ausführungsbeispiel möglich. Der gemeinsame Nullleiter N ist hier an eine Befestigungseinrichtung 139 geführt, die als Masse- bzw. Nullanschluss dient und über die das Gehäuse 138 auf einer Hutschiene herkömmlicher Bauform montierbar ist. In einer gängigen Installationsvorschriften, die eine Erdung der Hutschiene und eine davon getrennte Führung des Nullleiters vorschreiben, besser entsprechenden Abwandlung der in Figur 7 dargestellten Anordnung ist auch ein gesonderter Nullleiter vorsehbar, z.B. mit gesonderten Klemmen. Die Anordnung umfasst außer dem Taster T für das Einschalten bzw. Wiedereinschalten auch einen Anschluss für ein weiteres externes Steuersignal ES, der auch mehrfach für mehrere externe Steuersignale ES ausgeführt sein kann. Diese Kombination ermöglicht zusätzlich zum herkömmlichen Überstrom-Zeitschutz eine damit kombinierte, einfache und übersichtlich ausübbare Über- und Unterspannungsüberwachung sowie einen sicheren Wiederanlaufschutz für derart abgesicherte Anlagen, z. B. Maschinen, nach einer Unterbrechung der Versorgungsspannung selbst dann, wenn der eine Abschaltung auslösende Fehler nicht in der abgeschalteten Anlage bzw. dem abgeschalteten Abschnitt des gesicherten Wechselspannungsnetzes aufgetreten ist.

Figur 8 zeigt in Abwandlung der Figur 7 ein Beispiel für eine Anordnung einer erfindungsgemäßen Schutzeinrichtung, die nach dem ersten oder dem zweiten Ausführungsbeispiel 100 bzw. 200 ausgeführt sein kann, in Figur 8 jedoch nach dem zweiten Ausführungsbeispiel ausgebildet ist, als einziger Schutzeinrichtung in dem standardisierten Gehäuse 138 eines Sicherungsautomaten. Bis auf den Entfall der herkömmlichen Überstrom-Zeitschutzschalteinrichtung 137 ist die Anordnung nach Figur 8 mit derjenigen nach Figur 7 identisch ausgestaltet.

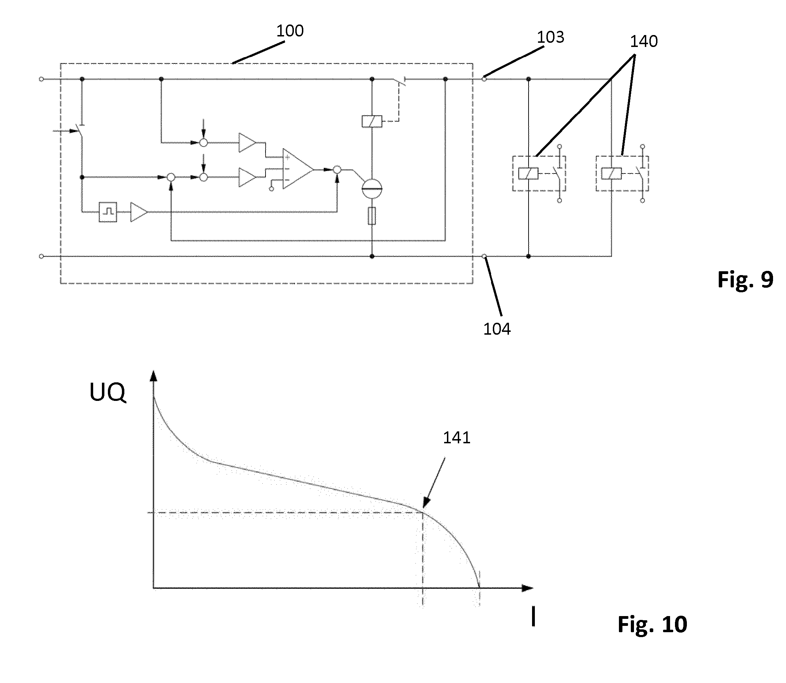

In Figur 9 ist anhand des ersten Ausführungsbeispiels der erfindungsgemäßen Schutzeinrichtung 100 nach Figur 1 dargestellt, auf welche Weise sich die Schutzeinrichtung 100 auch indirekt zur Steuerung weiterer Schalter 140, insbesondere Lastschalter, einsetzen lässt. Dazu werden die weiteren Schalter mit ihren einander parallelgeschalteten Steuereingängen, z.B. Relaisspulenanschlüssen, mit den Ausgangsanschlüssen 103 bzw. 104 der Schutzeinrichtung 100 verbunden. Die Spannung an den Ausgangsanschlüssen 103 bzw. 104 der Schutzeinrichtung 100 dient dann nicht mehr zum unmittelbaren Speisen einer oder mehrerer Lasten, sondern nur zum Speisen, d.h. Freigeben oder Abschalten, der Steuereingänge der weiteren Schalter 140.

Wie anhand der Darstellung der Figur 2 besonders deutlich erkennbar, jedoch auch den anderen Darstellungen entnehmbar ist, lässt sich die Anzahl der Anschlüsse der erfindungsgemäßen Schutzeinrichtung auf drei Anschlüsse reduzieren. Jede Unterbrechung am ersten Eingangsanschluss 101 oder am gemeinsamen Masseanschluss 128 unterbricht den Strom durch die Relaisspule S und führt so zum Abfallen des Relais 119 und damit zum Öffnen des Schaltkontakts K. Eine Unterbrechung des ersten Ausgangsanschluss 103 bewirkt direkt eine Unterbrechung des Stromkreises zwischen Energiequelle 126 und Last. Dadurch ist eine hohe Eigensicherheit der Schutzeinrichtung gewährleistet. Auch dies bedingt die Einsetzbarkeit als primären Netzschutz. Die erfindungsgemäße Schutzeinrichtung ist vorteilhaft auf einer geerdeten Schiene, insbesondere Hutschiene nach DIN-Norm, in herkömmlichen Schaltanlagen bzw. Schaltschränken verbaubar.

Besonders bevorzugt ist die erfindungsgemäße Schutzeinrichtung sowohl nach dem ersten als auch dem zweiten Ausführungsbeispiel verwendbar für ein Zusammenwirken als Überstromschutzeinrichtung mit einer Energiequelle 126, 134 mit einer geringen Überstromfähigkeit, wobei der Begriff "gering" hier im Vergleich mit der von einer mit herkömmlichen Überstrom-Zeitschutzschalteinrichtungen abgesicherten herkömmlichen Energiequelle bereitgestellten Überstromfähigkeit eines Mehrfachen eines Nennstroms verstanden und festgelegt ist. Als bevorzugtes Beispiel einer Energiequelle 126, 134 mit einer derartigen, geringen Überstromfähigkeit wird eine Brennstoffzelle oder eine Photovoltaikanlage aufgeführt, die durch eine herkömmliche Überstrom-Zeitschutzschalteinrichtung, die auf ihren Nennstrom dimensioniert ist, nicht absicherbar ist, da sie den erforderlichen Überstrom nicht bereitzustellen vermag. Beispielhaft ist dafür in Figur 10 eine Strom-Spannungs-Kennlinie, d.h. eine Kennlinie einer abgegebenen Versorgungsspannung UQ über einem abgegebenen Strom I, einer Energiequelle 126, 134 mit geringer Überstromfähigkeit, hier einer Brennstoffzelle 132, 135, schematisch dargestellt. Der Arbeitspunkt bei Nennspannung und Nennstrom ist durch einen Pfeil 141 markiert. Bei Erhöhung des Stromes I über den Arbeitspunkt 141 hinaus sinkt die Spannung UQ rasch ab. Mit der erfindungsgemäßen Schutzeinrichtung ist nun indirekt auch für diesen Typ von Energiequelle ein wirksamer Überstromschutz gegeben, da durch das Absinken der Spannung UQ die Unterspannungs-Überwachungseinrichtung auslöst. Damit wird für diese Art Energiequellen ein besonders universeller, wirksamer und zuverlässiger Netzschutz auf sehr einfache Weise erhalten.

**Bezugszeichenliste**

| | |
|---|---|
| 100 | Schutzeinrichtung |
| 101 | Erster Eingangsanschluss von 100 |
| 102 | Zweiter Eingangsanschluss von 100 |
| 103 | Erster Ausgangsanschluss von 100 |
| 104 | Zweiter Ausgangsanschluss von 100 |
| 105 | Masseleitung |
| 106 | Unterspannungs-Überwachungseinrichtung |
| 107 | Überspannungs-Überwachungseinrichtung |
| 108 | Erste Schwellenwertschaltung |
| 109 | Erste Addierstufe von 108 |
| 110 | Erste Proportionalstufe von 108 |
| 111 | Zweite Schwellenwertschaltung |
| 112 | Zweite Addierstufe von 111 |
| 113 | Zweite Proportionalstufe von 111 |
| 114 | Schalteinrichtung |
| 115 | Komparatoranordnung, bevorzugt Differenzverstärkeranordnung, von 114 |
| 116 | Lastschalteinrichtung von 114 |
| 117 | Stromquellenanordnung von 116 |
| 118 | Steueranschluss von 117 |
| 119 | Lastschalter, hier ein Relais, von 116 |
| 120 | Einschaltstufe |
| 121 | Verbindung von 120 |
| 122 | Verknüpfungsstufe von 120 |
| 123 | Impulsformstufe von 120 |
| 124 | Dritte Proportionalstufe von 120 |
| 125 | Weitere Verknüpfungsstufe |
| 126 | Energiequelle |
| 127 | Energieversorgungsnetz |
| 128 | Gemeinsamer Masseanschluss von 100 |
| 129 | Haltestromquelle von 117 |
| 130 | Einschaltstromquelle von 117 |
| 131 | Doppelpfeil |
| 132 | Brennstoffzelle in 126 |
| 133 | Gleichspannungswandler in 126 |
| 134 | Weitere Energiequelle |
| 135 | Brennstoffzelle in 134 |
| 136 | Gleichspannungswandler in 134 |
| 137 | Überstrom-Zeitschutzschalteinrichtung |
| 138 | Standardisiertes Gehäuse eines Sicherungsautomaten |
| 139 | Befestigungseinrichtung an 138 für Montage auf Hutschiene |
| 140 | Weitere Schalter |
| 141 | Pfeil |
| | |
| 200 | Schutzeinrichtung |
| 201 | Gleichrichteranordnung von 200 |
| 202 | Erster Wechselspannungs-Eingangsanschluss von 201 |
| 203 | Zweiter Wechselspannungs-Eingangsanschluss von 201 |
| 204 | Erster Gleichspannungsanschluss von 201: Pluspol |

| | |
|---|---|
| 205 | Zweiter Gleichspannungsanschluss von 201: Minuspol |
| 206 | Erster Ausgangsanschluss von 200, gebildet durch Phasenleiter L |
| 207 | Zweiter Ausgangsanschluss von 200, gebildet durch Nullleiter N |
| 208 | Wechselspannungs-Schaltkontakt, ergänzt zu 119 |
| | |
| C1 | Erster Kondensator |
| C2 | Zweiter Kondensator |
| | |
| D1 | Erste Diode |
| D2 | Zweite Diode |
| D3 | Dritte Diode |
| D4 | Vierte Diode |
| D5 | Fünfte Diode |
| | |
| DC-DC | Gleichspannungswandler |
| | |
| ES | Weiteres (externes) Steuersignal |
| | |
| I | Strom, von der Energiequelle abgegeben |
| | |
| K | Schaltkontakt des Lastschalters 119 |
| | |
| K1 | Erster Proportionalfaktor |
| K2 | Zweiter Proportionalfaktor |
| K3 | Dritter Proportionalfaktor |
| | |
| L | Erster Anschluss des Wechselspannungsnetzes: Phasenleiter |
| | |
| N | Zweiter Anschluss des Wechselspannungsnetzes: Nullleiter |
| | |
| R1 | Erster Widerstand |
| R2 | Zweiter Widerstand |
| R3 | Dritter Widerstand |
| R4 | Vierter Widerstand |
| R5 | Fünfter Widerstand |
| R6 | Sechster Widerstand |
| R7 | Siebter Widerstand |
| R8 | Achter Widerstand |
| R9 | Neunter Widerstand |
| R10 | Zehnter Widerstand |
| R11 | Elfter Widerstand |
| R12 | Zwölfter Widerstand |
| R13 | Dreizehnter Widerstand |
| R14 | Vierzehnter Widerstand |
| | |
| S | Relaisspule des Lastschalters 116 |
| | |
| SI | Sicherung in Reihe zur steuerbaren Stromquellenanordnung |
| | |
| T | Taster von 120 |

| T1 | Erster Transistor |
| T2 | Zweiter Transistor |
| T3 | Dritter Transistor |
| T4 | Vierter Transistor |
| T5 | Fünfter Transistor |

TE    Dauer des Zeitintervalls für das Einschalten, währenddessen die Einschaltstromquelle C2, R11, R13, R14, T5, Z5 zugeschaltet wird

UQ    Versorgungsspannung der Energiequelle / Messgleichspannung

US1   Erster Schwellenwert für die Messgleichspannung

US2   Zweiter Schwellenwert für die Messgleichspannung

UT1   Spannung an Basisanschluss von T1

UT2   Spannung an Basisanschluss von T2

UZ1   Durchbruchspannung von Z1

UZ2   Durchbruchspannung von Z2

UZ    Durchbruchspannung, vereinfacht UZ1 = UZ2 = UZ

Z1    Erste Zenerdiode

Z2    Zweite Zenerdiode

Z3    Dritte Zenerdiode

Z4    Vierte Zenerdiode

Z5    Fünfte Zenerdiode

## Patentansprüche

**1.** Schutzeinrichtung (100; 200) zum Schützen elektrischer Energieversorgungsnetze (127), in denen wenigstens eine Last aus wenigstens einer Energiequelle (126, 134) speisbar ist, umfassend wenigstens eine Unterspannungs-Überwachungseinrichtung (106) zum Detektieren, ob eine aus einer von der wenigstens einen Energiequelle (126, 134) abgebbaren Versorgungsspannung ableitbare Messgleichspannung (UQ) einen ersten Schwellenwert (US1) unterschreitet, wenigstens eine Überspannungs-Überwachungseinrichtung (107) zum Detektieren, ob die Messgleichspannung (UQ) einen zweiten Schwellenwert (US2) überschreitet, und wenigstens eine von der wenigstens einen Unterspannungs-Überwachungseinrichtung (106) und der wenigstens einen Überspannungs-Überwachungseinrichtung (107) gesteuerte Schalteinrichtung (114) zum Herstellen einer elektrischen Verbindung zwischen der wenigstens einen Energiequelle (126, 134) und der wenigstens einen Last, wenn die Messgleichspannung (UQ) mindestens dem ersten (US1) und höchstens dem zweiten Schwellenwert (US2) entspricht, wobei die wenigstens eine Unterspannungs-Überwachungseinrichtung (106) und die wenigstens eine Überspannungs-Überwachungseinrichtung (107) mit Schwellenwertschaltungen (108, 111) ausgebildet sind, die zum Vergleichen der Messgleichspannung (UQ) mit dem ersten bzw. zweiten Schwellenwert (US1, US2) und zum Liefern jeweils eines Abschaltsteuersignals an die wenigstens eine Schalteinrichtung (114) ausgestaltet sind, wenn die Messgleichspannung (UQ) den ersten Schwellenwert (US1) unterschreitet bzw. den zweiten Schwellenwert (US2) überschreitet, die wenigstens eine Schalteinrichtung (114) mit einer Komparatoranordnung (115), bevorzugt einer Differenzverstärkeranordnung, ausgebildet ist und die Komparatoranordnung (115) dazu ausgestaltet ist, in einen zweiten Schaltzustand gesteuert zu werden, wenn ihr eines der Abschaltsteuersignale zugeführt wird, und ansonsten einen ersten Schaltzustand einzunehmen, und die wenigstens eine Unterspannungs-Überwachungseinrichtung (106), die wenigstens eine Überspannungs-Überwachungseinrichtung (107) und die wenigstens eine Schalteinrichtung (114) ausschließlich aus der von der wenigstens einen Energiequelle (126, 134) abgebbaren Versorgungsspannung und/oder der Messgleichspannung (UQ) speisbar sind.

**2.** Schutzeinrichtung (100; 200) nach Anspruch 1, **dadurch gekennzeichnet, dass** die wenigstens eine Schalteinrichtung (114) weiterhin wenigstens eine von der Komparatoranordnung (115) steuerbare Lastschalteinrichtung (116) umfasst, die dazu ausgebildet ist, die elektrische Verbindung zwischen der wenigstens einen Energiequelle (126, 134) und der wenigstens einen Last im ersten Schaltzustand der Komparatoranordnung (115) herzustellen und in deren zweitem Schaltzustand zu unterbrechen.

**3.** Schutzeinrichtung (100; 200) nach Anspruch **2, dadurch gekennzeichnet, dass** die wenigstens eine Lastschalteinrichtung (116) wenigstens eine steuerbare Stromquellenanordnung (117) und wenigstens einen von der Stromquellenanordnung (117) durch Zuführen eines Steuerstroms steuerbaren, insbesondere elektromagnetischen, Lastschalter (119) umfasst und dass die Stromquellenanordnung (117) von der Komparatoranordnung (115) derart steuerbar ist, dass der Steuerstrom dem Lastschalter (119) im ersten Schaltzustand der Komparatoranordnung (115) zugeführt wird und in deren zweitem Schaltzustand unterbrochen ist.

**4.** Schutzeinrichtung (100; 200) nach einem oder mehreren der vorhergehenden Ansprüche, **gekennzeichnet durch** eine Einschaltstufe (120), der ein Einschaltsignal zuführbar und die derart gestaltet ist, dass **durch** ein Zuführen des Einschaltsignals die wenigstens eine Schalteinrichtung (114), bevorzugt die wenigstens eine Lastschalteinrichtung (116), besonders bevorzugt die wenigstens eine steuerbare Stromquellenanordnung (117) mit dem **durch** sie steuerbaren wenigstens einen, insbesondere elektromagnetischen, Lastschalter (119), aus einem zweiten Steuerzustand, in dem die elektrische Verbindung zwischen der wenigstens einen Energiequelle (126, 134) und der wenigstens einen Last unterbrochen ist, in einen ersten Steuerzustand, in dem die elektrische Verbindung zwischen der wenigstens einen Energiequelle (126, 134) und der wenigstens einen Last hergestellt ist, überführt wird.

5. Schutzeinrichtung (100; 200) nach Anspruch 4, **dadurch gekennzeichnet, dass** das Einschaltsignal der Einschaltstufe (120) durch eine externe Wirkverbindung (T) zuführbar ist.

6. Schutzeinrichtung (100; 200) nach Anspruch 4 oder 5, **dadurch gekennzeichnet, dass** die wenigstens eine Schalteinrichtung (114), bevorzugt die wenigstens eine Lastschalteinrichtung (116), besonders bevorzugt die wenigstens eine steuerbare Stromquellenanordnung (117) mit dem durch sie steuerbaren wenigstens einen, insbesondere elektromagnetischen, Lastschalter (119), aus dem zweiten Steuerzustand nur durch das Einschaltsignal in den ersten Steuerzustand überführbar ist.

7. Schutzeinrichtung (100; 200) nach einem oder mehreren der vorhergehenden Ansprüche, **dadurch gekennzeichnet, dass** die wenigstens eine Schalteinrichtung (114), bevorzugt die Komparatoranordnung (115), besonders bevorzugt die Differenzverstärkeranordnung, wenigstens eine Einrichtung aufweist zum Zuführen wenigstens eines weiteren Steuersignals (ES) zum Steuern des Steuerzustands der wenigstens einen Schalteinrichtung (114), bevorzugt des Schaltzustands der Komparatoranordnung (115), besonders bevorzugt der Differenzverstärkeranordnung, und dass das weitere Steuersignal (ES) insbesondere ein weiteres Abschaltsteuersignal ist, durch das die Komparatoranordnung (115) in den zweiten Schaltzustand steuerbar ist.

8. Schutzeinrichtung (100; 200) nach Anspruch 3 in Verbindung mit Anspruch 4 oder nach einem oder mehreren der Ansprüche 5 bis 7 in Verbindung mit Anspruch 3 und 4, **dadurch gekennzeichnet, dass** die wenigstens eine steuerbare Stromquellenanordnung (117) von der Einschaltstufe (120) steuerbar ausgebildet ist zu einem durch das Zuführen des Einschaltsignals veranlassten Liefern eines erhöhten Steuerstroms an den Lastschalter (119).

9. Schutzeinrichtung (100; 200) nach einem oder mehreren der vorhergehenden Ansprüche, **dadurch gekennzeichnet, dass** die wenigstens eine Unterspannungs-Überwachungseinrichtung (106) und/oder die wenigstens eine Überspannungs-Überwachungseinrichtung (107) mit Zeitgliedern ausgebildet sind zum Unterdrücken eines Einflusses vorgebbare Zeitdauern unterschreitender Unterschreitungen des ersten Schwellenwerts (US1) und/oder Überschreitungen des zweiten Schwellenwerts (US2) auf das Steuern der wenigstens einen Schalteinrichtung (114).

10. Schutzeinrichtung (100) nach einem oder mehreren der vorhergehenden Ansprüche, **dadurch gekennzeichnet, dass** die Messgleichspannung (UQ) mit der Versorgungsspannung wenigstens nahezu übereinstimmt.

11. Schutzeinrichtung (200) nach einem oder mehreren der Ansprüche 1 bis 9, **gekennzeichnet durch** eine Gleichrichteranordnung zum Gewinnen der Messgleichspannung (UQ) aus der Versorgungsspannung **durch** Gleichrichtung (201).

12. Schutzeinrichtung (100; 200) nach einem oder mehreren der vorhergehenden Ansprüche, **dadurch gekennzeichnet, dass** die wenigstens eine Schalteinrichtung (114), bevorzugt die wenigstens eine Lastschalteinrichtung (116), besonders bevorzugt der wenigstens eine, insbesondere elektromagnetische, Lastschalter (119), mit einer Überstrom-Zeitschutzschalteinrichtung (137) in Reihenschaltung angeordnet ist.

13. Energiequelle (126, 134), **gekennzeichnet durch** eine Schutzeinrichtung (100; 200) nach einem oder mehreren der vorhergehenden Ansprüche.

14. Energieversorgungsnetz (127), **gekennzeichnet durch** wenigstens eine Schutzeinrichtung (100; 200) nach einem oder mehreren der Ansprüche 1 bis 12 und/oder wenigstens eine Energiequelle (126, 134) nach Anspruch 13.

15. Verwendung einer Schutzeinrichtung (100; 200) nach einem oder mehreren der Ansprüche 1 bis 12 für ein Zusammenwirken als Überstromschutzeinrichtung mit einer Energiequelle (126, 134) mit einer geringen Überstromfähigkeit.

**Fig. 1**

EP 2 978 090 A1

**Fig. 2**

EP 2 978 090 A1

**Fig. 3**

**Fig. 4**

EP 2 978 090 A1

Fig. 5

Fig. 6

T

138

ES

L

200

137

139

N

206

**Fig. 7**

T

138

ES

L

200

206

139

N

**Fig. 8**

EP 2 978 090 A1

**Fig. 9**

**Fig. 10**

**Europäisches Patentamt**
**European Patent Office**
**Office européen des brevets**

## EUROPÄISCHER RECHERCHENBERICHT

**Nummer der Anmeldung**

EP 15 17 8059

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 918 562 A (PULIZZI PETER S [US] ET AL) 17. April 1990 (1990-04-17) * Zusammenfassung; Abbildungen 1-5 * * Spalte 2, Zeile 14 - Zeile 50 * ----- | 1-15 | INV. H02H3/20 ADD. H02H3/087 |
| X,D | US 5 555 483 A (PRESSMAN STANTON L [US] ET AL) 10. September 1996 (1996-09-10) * das ganze Dokument * ----- | 1-4,6-15 | |
| X | US 3 657 603 A (ADAMS WILLIAM M) 18. April 1972 (1972-04-18) * das ganze Dokument * ----- | 1-10, 12-15 | |
| X | WO 2014/060513 A1 (DSPACE GMBH [DE]) 24. April 2014 (2014-04-24) * das ganze Dokument * ----- | 1,2,4,7, 10,12-15 | |

**RECHERCHIERTE SACHGEBIETE (IPC)**

H02H

Der vorliegende Recherchenbericht wurde für alle Patentansprüche erstellt

| Recherchenort | Abschlußdatum der Recherche | Prüfer |
|---|---|---|
| München | 27. November 2015 | Palukova, Mila |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 17 8059

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-11-2015

| Im Recherchenbericht angeführtes Patentdokument | Datum der Veröffentlichung | Mitglied(er) der Patentfamilie | Datum der Veröffentlichung |
|---|---|---|---|
| US 4918562 A | 17-04-1990 | CA 2008660 A1<br>EP 0381131 A2<br>JP H03198617 A<br>US 4918562 A | 30-07-1990<br>08-08-1990<br>29-08-1991<br>17-04-1990 |
| US 5555483 A | 10-09-1996 | KEINE | |
| US 3657603 A | 18-04-1972 | KEINE | |
| WO 2014060513 A1 | 24-04-2014 | DE 102012109979 A1<br>WO 2014060513 A1 | 15-05-2014<br>24-04-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US PS3718839 A
- US PS3656045 A
- US PS5555483 A
- US PS3809963 A